(19) Europäisches Patentamt
European Patent Office
Office européen des brevets

(11) **EP 3 836 646 A1**

(12) **EUROPEAN PATENT APPLICATION**
published in accordance with Art. 153(4) EPC

(43) Date of publication:
**16.06.2021 Bulletin 2021/24**

(51) Int Cl.:
*H04W 52/18* (2009.01)

(21) Application number: **19846390.3**

(86) International application number:
**PCT/CN2019/100250**

(22) Date of filing: **12.08.2019**

(87) International publication number:
**WO 2020/030190 (13.02.2020 Gazette 2020/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **10.08.2018 CN 201810911074**

(71) Applicant: **HUAWEI TECHNOLOGIES CO., LTD.**
**Shenzhen, Guangdong 518129 (CN)**

(72) Inventors:
• **ZHANG, Qian**
  **Guangdong 518129 (CN)**
• **ZHANG, Xingwei**
  **Guangdong 518129 (CN)**
• **LIU, Zhe**
  **Guangdong 518129 (CN)**
• **FENG, Shulan**
  **Guangdong 518129 (CN)**

(74) Representative: **Gill Jennings & Every LLP**
**The Broadgate Tower**
**20 Primrose Street**
**London EC2A 2ES (GB)**

(54) **METHOD AND DEVICE FOR DETERMINING POWER**

(57) Embodiments of this application provide a power determining method and apparatus. The method includes: obtaining, by a terminal device, an LTE-side additional maximum power reduction AMPR of the terminal device based on New Radio NR-side semi-static configuration information and Long Term Evolution LTE-side real-time scheduling information of the terminal device, where the semi-static configuration information includes NR-side bandwidth part BWP information of the terminal device; and determining, by the terminal device, an LTE-side configured maximum power of the terminal device based on the LTE-side AMPR, and sending the LTE-side configured maximum power to a network device. The LTE-side AMPR is obtained based on the NR-side semi-static configuration information and the LTE-side real-time scheduling information, so that an AMPR indicator is optimized, uplink coverage of the terminal device is improved, and that a radio frequency indicator cannot meet a criterion is avoided. The power determining method provided in the embodiments is more appropriate.

FIG. 2

**Description**

This application claims priority to Chinese Patent Application No. 201810911074.9, filed with the Chinese Patent Office on August 10, 2018 and entitled "POWER DETERMINING METHOD AND APPARATUS", which is incorporated herein by reference in its entirety.

**TECHNICAL FIELD**

This application relates to the field of communications technologies, and in particular, to a power determining method and apparatus.

**BACKGROUND**

A dual connectivity technology is a communications technology for improving radio resource utilization, reducing a system handover delay, and improving user and system performance. In an intra-band EN-DC dual connectivity technology, an LTE carrier is very close to an NR carrier, and an intermodulation product exists during uplink dual transmission, affecting a corresponding radio frequency (radio frequency, RF) indicator of LTE and NR. Therefore, a transmit power of LTE and a transmit power of NR need to be reduced during dual transmission, to reduce mutual interference during uplink dual transmission and avoid a harmonic wave caused by intermodulation.

An indicator for reducing the transmit power is specifically an AMPR. After determining the AMPR, a terminal device may reduce a configured maximum power of the terminal device based on the AMPR, to reduce interference when the terminal device performs uplink dual transmission, and optimize the RF indicator. The AMPR is ideally obtained in the following manner: The terminal device performs calculation based on LTE-side real-time scheduling information and NR-side real-time scheduling information. However, in the intra-band EN-DC technology, the NR-side real-time scheduling information cannot be obtained on an LTE side, and the LTE-side real-time scheduling information can be obtained on an NR side only when dynamic power sharing is supported.

When real-time scheduling information of a peer side cannot be obtained on a local side of the terminal device, in a conventional communications system, it is assumed that the real-time scheduling information of the peer side is one resource block (resourse block, RB), that is, uplink information of the peer side occupies only one RB, so that the terminal device obtains a maximum total AMPR. In addition, excessive power is allocated to the local side when the peer side occupies only one RB. As a result, a calculated AMPR of a local side is insufficient.. Therefore, a power adjustment value of the local side needs to be obtained by assuming that the peer side occupies a maximum quantity of RBs. A maximum AMPR of the local side can be obtained based on the total AMPR and the power adjustment value of the local side, to maximize a power reduction of the local side. Therefore, the indicator for reducing the power is excessively loose in the conventional manner of obtaining the AMPR, and an uplink transmit power deteriorates, affecting uplink coverage of intra-band EN-DC. As a result, a conventional configuration manner of power reduction compensation is inappropriate.

**SUMMARY**

Embodiments of this application provide a power determining method and apparatus, to resolve a problem that a conventional configuration manner of power reduction compensation is inappropriate.

According to a first aspect, an embodiment of this application provides a power determining method, including:

A terminal device obtains an LTE-side AMPR of the terminal device based on NR-side semi-static configuration information and LTE-side real-time scheduling information of the terminal device. The semi-static configuration information includes NR-side BWP information of the terminal device.

The terminal device determines an LTE-side configured maximum power of the terminal device based on the LTE-side AMPR, and sends the LTE-side configured maximum power to a network device.

The LTE-side AMPR is obtained based on the NR-side semi-static configuration information and the LTE-side real-time scheduling information, so that an AMPR indicator is optimized, uplink coverage of the terminal device is improved, and that a radio frequency indicator cannot meet a criterion is avoided. The power determining method provided in this embodiment is more appropriate.

In a possible implementation, the obtaining, by a terminal device, an LTE-side AMPR of the terminal device based on NR-side semi-static configuration information and LTE-side real-time scheduling information of the terminal device includes:

obtaining, by the terminal device, an LTE-side resource block allocation ratio of the terminal device based on first BWP information and the LTE-side real-time scheduling information, where the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;

obtaining, by the terminal device, an LTE-side power adjustment value of the terminal device based on second BWP information and the LTE-side real-time scheduling information, where the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and

obtaining, by the terminal device, the LTE-side AMPR of the terminal device based on the LTE-side resource block allocation ratio and the LTE-side power adjustment value.

In a possible implementation, the obtaining, by the terminal device, an LTE-side resource block allocation ratio of the terminal device based on first BWP information and the LTE-side real-time scheduling information includes:

obtaining, by the terminal device, the LTE-side resource block allocation ratio A1 of the terminal device based on the first BWP information and the LTE-side real-time scheduling information by using the following formula 1:

$$A1 = \frac{L_{CRB,LTE} + BWP1_{NR}}{N_{RB,LTE} + N_{RB,NR}} \qquad \text{formula 1,}$$

where

$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

In a possible implementation, the obtaining, by the terminal device, an LTE-side power adjustment value of the terminal device based on second BWP information and the LTE-side real-time scheduling information includes:

obtaining, by the terminal device, the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE} + BWP4_{NR}} \qquad \text{formula 2,}$$

where

$L_{CRB,LTE}$ is the quantity of resource blocks allocated in the LTE-side real-time scheduling information, and $BWP4_{NR}$ is the quantity of resource blocks in the NR-side second BWP.

In a possible implementation, the power determining method further includes:

The terminal device obtains an NR-side AMPR of the terminal device based on the LTE-side real-time scheduling information and NR-side real-time scheduling information of the terminal device.

The terminal device determines an NR-side maximum power of the terminal device based on the NR-side AMPR, and sending the NR-side maximum power to the network device.

In a possible implementation, the obtaining, by the terminal device, an NR-side AMPR of the terminal device based on the LTE-side real-time scheduling information and NR-side real-time scheduling information of the terminal device includes:

obtaining, by the terminal device, an NR-side resource block allocation ratio A3 of the terminal device based on the LTE-side real-time scheduling information and the NR-side real-time scheduling information of the terminal device by using the following formula 3, where the resource block allocation ratio is a ratio of a quantity of resource blocks allocated to the terminal device to a quantity of resource blocks in a transmission bandwidth:

$$A3 = \frac{L_{CRB,LTE} + L_{CRB,NR}}{N_{RB,LTE} + N_{RB,NR}} \qquad \text{formula 3;}$$

and

obtaining, by the terminal device, the NR-side AMPR of the terminal device based on the NR-side resource block allocation ratio A3, where

$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

In a possible implementation, before the obtaining, by a terminal device, an LTE-side AMPR of the terminal device based on NR-side semi-static configuration information and LTE-side real-time scheduling information of the terminal device, the power determining method further includes:
determining, by the terminal device, that the terminal device is located at a non-cell-edge location.

Based on different cell locations of the terminal device, different power determining methods are used to further optimize an AMPR indicator, so that a power reduction of the terminal device is more flexible.

In a possible implementation, before the determining, by the terminal device, an NR-side maximum power of the terminal device based on the NR-side AMPR, the power determining method further includes:
compensating, by the terminal device, the NR-side AMPR of the terminal device based on the LTE-side AMPR and the NR-side AMPR.

In consideration that the LTE-side AMPR estimated in a worst case causes an excessive power reduction of the terminal device, a method for compensating a local side with an excessive power reduction on a peer side is used to further make the power determining method more appropriate.

In a possible implementation, the compensating, by the terminal device, the NR-side AMPR of the terminal device based on the LTE-side AMPR and the NR-side AMPR includes:

obtaining, by the terminal device, a difference between the NR-side AMPR and the LTE-side AMPR; and
compensating, by the terminal device, the NR-side AMPR of the terminal device based on the difference.

In a possible implementation, the determining, by the terminal device, that the terminal device is located at a non-cell-edge location includes:

obtaining, by the terminal device, path loss information of the terminal device; and
when the path loss information is less than a path loss threshold, determining, by the terminal device, that the terminal device is located at a non-cell-edge location.

In a possible implementation, the power determining method further includes:
when determining that the terminal device is located at a cell-edge location, obtaining, by the terminal device, the LTE-side AMPR of the terminal device based on the LTE-side real-time scheduling information and NR-side preset scheduling information of the terminal device.

According to a second aspect, an embodiment of this application further provides a power determining method, including:
A terminal device obtains a first-side initial AMPR of the terminal device based on first-side real-time scheduling information and second-side preset scheduling information of the terminal device.

The terminal device determines a first-side AMPR compensation value of the terminal device based on a preset probability value and a first mapping relationship, where the first mapping relationship is a mapping relationship between an AMPR compensation value and a probability value, and the first mapping relationship indicates a probability of overcompensating the initial AMPR when the initial AMPR is compensated with different AMPR compensation values.

The terminal device determines a first-side AMPR of the terminal device based on the first-side initial AMPR and the first-side AMPR compensation value.

The terminal device determines a first-side maximum power of the terminal device based on the first-side AMPR, and sends the first-side maximum power to a network device.

One of the first side and the second side is an LTE side, and the other is an NR side.

In a possible implementation, before the determining, by the terminal device, a first-side AMPR compensation value of the terminal device based on a preset probability value and a first mapping relationship, the power determining method further includes:

The terminal device obtains first-side first AMPRs of the terminal device that correspond to different value combinations of first-side real-time scheduling information and second-side real-time scheduling information.

The terminal device obtains, based on the second-side preset scheduling information and the first-side real-time scheduling information that is in each of the combinations, a first-side second AMPR corresponding to each of the combinations.

The terminal device obtains, based on the first-side first APMR and the first-side second AMPR that correspond to each of the combinations, an AMPR compensation value corresponding to each of the combinations.

The terminal device obtains the first mapping relationship based on the AMPR compensation value corresponding to each of the combinations.

In a possible implementation, the obtaining, by a terminal device, a first-side initial AMPR of the terminal device based on first-side real-time scheduling information and second-side preset scheduling information of the terminal device includes:

obtaining, by the terminal device, a first-side resource block allocation ratio A4 of the terminal device based on the first-side real-time scheduling information and the second-side preset scheduling information of the terminal device by using the following formula 4, where the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4;}$$

obtaining, by the terminal device, a first-side power adjustment value $\Delta_1$ of the terminal device based on the first-side real-time scheduling information and the second-side preset scheduling information of the terminal device by using the following formula 5, where the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5;}$$

and

obtaining, by the terminal device, the first-side initial AMPR of the terminal device based on the resource block allocation ratio A4 and the power adjustment value $\Delta_1$, where
$L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

In a possible implementation, the first side is an NR side, the second side is an LTE side, and the power determining method further includes:
The terminal device obtains an LTE-side AMPR of the terminal device based on NR-side semi-static configuration information and LTE-side real-time scheduling information of the terminal device, where the semi-static configuration information includes NR-side bandwidth part BWP information of the terminal device.

The terminal device determines an LTE-side maximum power of the terminal device based on the LTE-side AMPR, and sends the LTE-side maximum power to the network device.

According to a third aspect, this application provides a power determining apparatus. The apparatus is configured to perform the method according to any one of the first aspect or the possible implementations of the first aspect, and has a same technical effect. Specifically, the apparatus includes modules configured to perform the method according to any one of the first aspect or the possible implementations of the first aspect.

In a possible implementation, the power determining apparatus includes:

an AMPR obtaining module, configured to obtain an LTE-side AMPR of the terminal device based on NR-side semi-static configuration information and LTE-side real-time scheduling information of the terminal device, where the semi-static configuration information includes NR-side BWP information of the terminal device;
a power determining module, configured to determine an LTE-side maximum power of the terminal device based on the LTE-side AMPR; and
a sending module, configured to send the LTE-side maximum power to a network device.

In a possible implementation, the AMPR obtaining module includes:

a resource block allocation ratio obtaining unit, configured to obtain an LTE-side resource block allocation ratio of the terminal device based on first BWP information and the LTE-side real-time scheduling information, where the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;
a power adjustment value obtaining unit, configured to obtain an LTE-side power adjustment value of the terminal device based on second BWP information and the LTE-side real-time scheduling information, where the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and
an AMPR obtaining unit, configured to obtain the LTE-side AMPR of the terminal device based on the LTE-side resource block allocation ratio and the LTE-side power adjustment value.

In a possible implementation, the resource block allocation ratio obtaining unit is specifically configured to: obtain the LTE-side resource block allocation ratio A1 of the terminal device based on the first BWP information and the LTE-side real-time scheduling information by using the following formula 1:

$$A1 = \frac{L_{CRB,LTE}+BWP1_{NR}}{N_{RB,LTE}+N_{RB,NR}} \qquad \text{formula 1,}$$

where
$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

In a possible implementation, the power adjustment value obtaining unit is specifically configured to: obtain the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE}+BWP4_{NR}} \qquad \text{formula 2,}$$

where
$L_{CRB,LTE}$ is the quantity of resource blocks allocated in the LTE-side real-time scheduling information, and $BWP4_{NR}$ is the quantity of resource blocks in the NR-side second BWP.

In a possible implementation, the AMPR obtaining module is further configured to obtain an NR-side AMPR of the terminal device based on the LTE-side real-time scheduling information and NR-side real-time scheduling information of the terminal device;
the power determining module is further configured to determine an NR-side maximum power of the terminal device based on the NR-side AMPR; and
the sending module is further configured to send the NR-side maximum power to the network device.

In a possible implementation, the resource block allocation ratio obtaining unit is further configured to obtain an NR-side resource block allocation ratio A3 of the terminal device based on the LTE-side real-time scheduling information and the NR-side real-time scheduling information of the terminal device by using the following formula 3, where the resource block allocation ratio is a ratio of a quantity of resource blocks allocated to the terminal device to a quantity of resource blocks in a transmission bandwidth:

$$A3 = \frac{L_{CRB,LTE}+L_{CRB,NR}}{N_{RB,LTE}+N_{RB,NR}} \qquad \text{formula 3;}$$

and
the AMPR obtaining unit is further configured to obtain the NR-side AMPR of the terminal device based on the NR-side resource block allocation ratio A3, where
$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

In a possible implementation, the power determining apparatus further includes:

a location detection module, configured to determine whether the terminal device is located at a cell-edge location; and

the AMPR obtaining module is specifically configured to: when the terminal device is located at a non-cell-edge location, obtain the LTE-side AMPR of the terminal device based on the NR-side semi-static configuration information and the LTE-side real-time scheduling information of the terminal device.

In a possible implementation, the power determining apparatus further includes:
a compensation module, configured to compensate the NR-side AMPR of the terminal device based on the LTE-side AMPR and the NR-side AMPR.
In a possible implementation, the compensation module includes:

a difference obtaining unit, configured to obtain a difference between the NR-side AMPR and the LTE-side AMPR; and
a compensation unit, configured to compensate the NR-side AMPR of the terminal device based on the difference.

According to a fourth aspect, this application provides a power determining apparatus. The apparatus is configured to perform the method according to any one of the second aspect or the possible implementations of the second aspect, and has a same technical effect. Specifically, the apparatus includes modules configured to perform the method according to any one of the second aspect or the possible implementations of the second aspect.
In a possible implementation, the power determining apparatus includes:

an AMPR obtaining module, configured to obtain a first-side initial AMPR of the terminal device based on first-side real-time scheduling information and second-side preset scheduling information of the terminal device;
an AMPR compensation value obtaining module, configured to determine a first-side AMPR compensation value of the terminal device based on a preset probability value and a first mapping relationship, where the first mapping relationship is a mapping relationship between an AMPR compensation value and a probability value, and the first mapping relationship indicates a probability of overcompensating the initial AMPR when the initial AMPR is compensated with different AMPR compensation values;
an AMPR compensation module, configured to determine a first-side AMPR of the terminal device based on the first-side initial AMPR and the first-side AMPR compensation value;
a power determining module, configured to determine a first-side maximum power of the terminal device based on the first-side AMPR; and
a sending module, configured to send the first-side maximum power to a network device, where
one of the first side and the second side is an LTE side, and the other is an NR side.

In a possible implementation, the AMPR obtaining module is further configured to obtain first-side first AMPRs of the terminal device that correspond to different value combinations of first-side real-time scheduling information and second-side real-time scheduling information;
the AMPR obtaining module is further configured to obtain, based on the second-side preset scheduling information and the first-side real-time scheduling information that is in each of the combinations, a first-side second AMPR corresponding to each of the combinations; and
the power determining apparatus further includes: a first mapping relationship obtaining module, configured to: obtain, based on the first-side first APMR and the first-side second AMPR that correspond to each of the combinations, an AMPR compensation value corresponding to each of the combinations, and obtain the first mapping relationship based on the AMPR compensation value corresponding to each of the combinations.
In a possible implementation, the AMPR obtaining module includes:

a resource block allocation ratio obtaining unit, configured to obtain a first-side resource block allocation ratio A4 of the terminal device based on the first-side real-time scheduling information and the second-side preset scheduling information of the terminal device by using the following formula 4, where the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4;}$$

a power adjustment value obtaining unit, configured to obtain a first-side power adjustment value $\Delta_1$ of the terminal device based on the first-side real-time scheduling information and the second-side preset scheduling information of the terminal device by using the following formula 5, where the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1}+\tilde{N}_{RB,2}} \qquad \text{formula 5;}$$

and

an AMPR obtaining unit, configured to obtain the first-side initial AMPR of the terminal device based on the resource block allocation ratio A4 and the power adjustment value $\Delta_1$, where $L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

In a possible implementation, the first side is an NR side, and the second side is an LTE side; the AMPR obtaining module is further configured to obtain an LTE-side AMPR of the terminal device based on NR-side semi-static configuration information and LTE-side real-time scheduling information of the terminal device, where the semi-static configuration information includes NR-side bandwidth part BWP information of the terminal device; the power determining module is further configured to determine an LTE-side maximum power of the terminal device based on the LTE-side AMPR; and the sending module is further configured to send the LTE-side maximum power to the network device.

According to a fifth aspect, this application provides a terminal device. The terminal device is configured to perform the method according to any one of the first aspect or the possible implementations of the first aspect, and has a same technical effect. Specifically, the terminal device includes parts configured to perform the method according to any one of the first aspect or the possible implementations of the first aspect.

In a possible implementation, the terminal device includes:

a processor, configured to obtain an LTE-side AMPR of the terminal device based on NR-side semi-static configuration information and LTE-side real-time scheduling information of the terminal device, where the semi-static configuration information includes NR-side BWP information of the terminal device, where the processor is further configured to determine an LTE-side maximum power of the terminal device based on the LTE-side AMPR; and a transmitter, configured to send the LTE-side maximum power to a network device.

In a possible implementation, the processor is specifically configured to:

obtain an LTE-side resource block allocation ratio of the terminal device based on first BWP information and the LTE-side real-time scheduling information, where the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;
obtain an LTE-side power adjustment value of the terminal device based on second BWP information and the LTE-side real-time scheduling information, where the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and
obtain the LTE-side AMPR of the terminal device based on the LTE-side resource block allocation ratio and the LTE-side power adjustment value.

In a possible implementation, the processor is specifically configured to:
obtain the LTE-side resource block allocation ratio A1 of the terminal device based on the first BWP information and the LTE-side real-time scheduling information by using the following formula 1:

$$A1 = \frac{L_{CRB,LTE}+BWP1_{NR}}{N_{RB,LTE}+N_{RB,NR}} \qquad \text{formula 1,}$$

where

$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

In a possible implementation, the processor is specifically configured to:
obtain the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE}+BWP4_{NR}} \qquad \text{formula 2,}$$

where

$L_{CRB,LTE}$ is the quantity of resource blocks allocated in the LTE-side real-time scheduling information, and $BWP4_{NR}$ is the quantity of resource blocks in the NR-side second BWP.

In a possible implementation, the processor is further configured to: obtain an NR-side AMPR of the terminal device based on the LTE-side real-time scheduling information and NR-side real-time scheduling information of the terminal device; and
determine an NR-side maximum power of the terminal device based on the NR-side AMPR; and
the transmitter is further configured to send the NR-side maximum power to the network device.

In a possible implementation, the processor is further configured to: obtain an NR-side resource block allocation ratio A3 of the terminal device based on the LTE-side real-time scheduling information and the NR-side real-time scheduling information of the terminal device by using the following formula 3, where the resource block allocation ratio is a ratio of a quantity of resource blocks allocated to the terminal device to a quantity of resource blocks in a transmission bandwidth:

$$A3 = \frac{L_{CRB,LTE}+L_{CRB,NR}}{N_{RB,LTE}+N_{RB,NR}} \qquad \text{formula 3;}$$

and

obtain the NR-side AMPR of the terminal device based on the NR-side resource block allocation ratio A3, where
$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

In a possible implementation, the processor determines whether the terminal device is located at a cell-edge location; and
the processor is specifically configured to: when the terminal device is located at a non-cell-edge location, obtain the LTE-side AMPR of the terminal device based on the NR-side semi-static configuration information and the LTE-side real-time scheduling information of the terminal device.

In a possible implementation, the processor is further configured to compensate the NR-side AMPR of the terminal device based on the LTE-side AMPR and the NR-side AMPR.

In a possible implementation, the processor is specifically configured to:

obtain a difference between the NR-side AMPR and the LTE-side AMPR; and
compensate the NR-side AMPR of the terminal device based on the difference.

According to a sixth aspect, this application provides a terminal device. The terminal device is configured to perform the method according to any one of the second aspect or the possible implementations of the second aspect, and has a same technical effect. Specifically, the terminal device includes parts configured to perform the method according to any one of the second aspect or the possible implementations of the second aspect.

In a possible implementation, the terminal device includes:

a processor, configured to obtain a first-side initial AMPR of the terminal device based on first-side real-time scheduling information and second-side preset scheduling information of the terminal device, where
the processor is further configured to determine a first-side AMPR compensation value of the terminal device based on a preset probability value and a first mapping relationship, where the first mapping relationship is a mapping relationship between an AMPR compensation value and a probability value, and the first mapping relationship indicates a probability of overcompensating the initial AMPR when the initial AMPR is compensated with different AMPR compensation values;

the processor is further configured to determine a first-side AMPR of the terminal device based on the first-side initial AMPR and the first-side AMPR compensation value; and

the processor is further configured to determine a first-side maximum power of the terminal device based on the first-side AMPR; and

a transmitter, configured to send the first-side maximum power to a network device, where

one of the first side and the second side is an LTE side, and the other is an NR side.

In a possible implementation, the processor is further configured to: obtain first-side first AMPRs of the terminal device that correspond to different value combinations of first-side real-time scheduling information and second-side real-time scheduling information;

obtain, based on the second-side preset scheduling information and the first-side real-time scheduling information that is in each of the combinations, a first-side second AMPR corresponding to each of the combinations; and

obtain, based on the first-side first APMR and the first-side second AMPR that correspond to each of the combinations, an AMPR compensation value corresponding to each of the combinations, and obtain the first mapping relationship based on the AMPR compensation value corresponding to each of the combinations.

In a possible implementation, the processor is further configured to: obtain a first-side resource block allocation ratio A4 of the terminal device based on the first-side real-time scheduling information and the second-side preset scheduling information of the terminal device by using the following formula 4, where the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4;}$$

obtain a first-side power adjustment value $\Delta_1$ of the terminal device based on the first-side real-time scheduling information and the second-side preset scheduling information of the terminal device by using the following formula 5, where the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5;}$$

and

obtain the first-side initial AMPR of the terminal device based on the resource block allocation ratio A4 and the power adjustment value $\Delta_1$, where

$L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

In a possible implementation, the first side is an NR side, and the second side is an LTE side;

the processor is further configured to: obtain an LTE-side AMPR of the terminal device based on NR-side semi-static configuration information and LTE-side real-time scheduling information of the terminal device, where the semi-static configuration information includes NR-side bandwidth part BWP information of the terminal device; and

determine an LTE-side maximum power of the terminal device based on the LTE-side AMPR; and

the transmitter is further configured to send the LTE-side maximum power to the network device.

According to a seventh aspect, this application provides a terminal device, including: a memory, a processor, and a computer program. The computer program is stored in the memory, and the processor runs the computer program to perform the power determining method according to any one of the first aspect or the possible implementations of the first aspect and any one of the second aspect or the possible implementations of the second aspect.

According to an eighth aspect, this application provides a computer storage medium. The storage medium includes a computer program, and the computer program is configured to perform the power determining method according to any one of the first aspect or the possible implementations of the first aspect and any one of the second aspect or the possible implementations of the second aspect.

According to a ninth aspect, this application provides a computer program product. The computer program product includes computer program code, and when the computer program code is run on a computer, the computer is enabled to perform the power determining method according to any one of the first aspect or the possible implementations of the first aspect and any one of the second aspect or the possible implementations of the second aspect.

According to a tenth aspect, this application provides a chip, including a memory and a processor. The memory is configured to store a computer program. The processor is configured to invoke the computer program from the memory and run the computer program, so that a terminal device on which the chip is installed performs the power determining method according to any one of the first aspect or the possible implementations of the first aspect and any one of the second aspect or the possible implementations of the second aspect.

Based on the implementations provided in the foregoing various aspects, combinations may be further made in this application to provide more implementations.

## BRIEF DESCRIPTION OF DRAWINGS

FIG. 1 is a schematic structural diagram of a communications system according to an embodiment of this application;
FIG. 2 is a schematic flowchart of a power determining method according to Embodiment 1 of this application;
FIG. 3 is a schematic flowchart of a power determining method according to Embodiment 2 of this application;
FIG. 4 is a schematic flowchart of a power determining method according to Embodiment 3 of this application;
FIG. 5 is a schematic flowchart of a power determining method according to Embodiment 4 of this application;
FIG. 6 is a schematic structural diagram of a power determining apparatus according to Embodiment 1 of this application;
FIG. 7 is a schematic structural diagram of a power determining apparatus according to Embodiment 2 of this application;
FIG. 8 is a schematic structural diagram of a power determining apparatus according to Embodiment 3 of this application;
FIG. 9 is a schematic structural diagram of a power determining apparatus according to Embodiment 4 of this application; and
FIG. 10 is a schematic structural diagram of a terminal device according to Embodiment 1 of this application.

## DESCRIPTION OF EMBODIMENTS

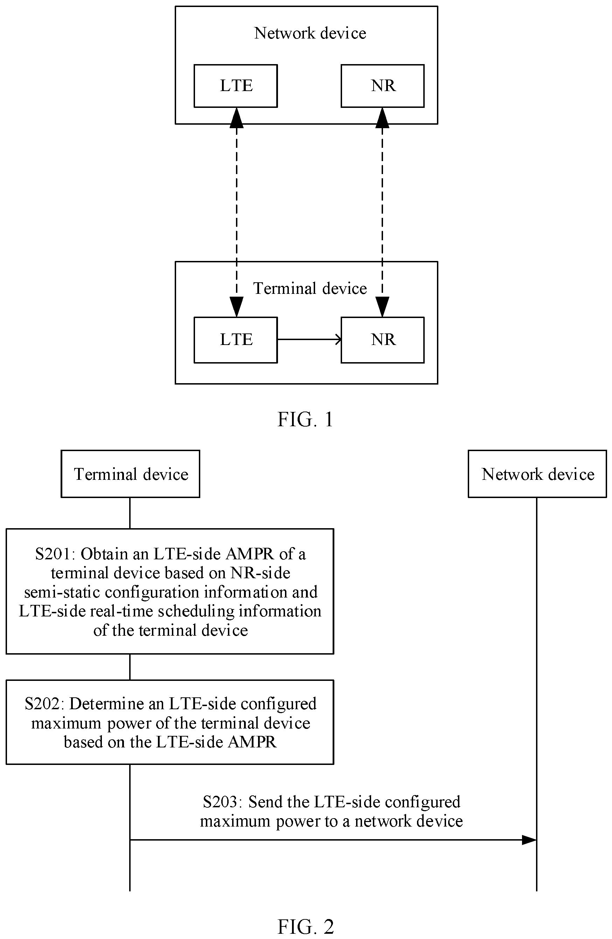

FIG. 1 is a schematic structural diagram of a communications system according to an embodiment of this application. As shown in FIG. 1, the communications system may include: a network device and a terminal device.

The network device is a device for connecting a terminal device to a wireless network, and may be an evolved NodeB (evolutional node B, eNB or eNodeB) in Long Term Evolution (long term evolution, LTE), or an evolved universal mobile telecommunications system (universal mobile telecommunications system, UMTS) terrestrial radio access network (evolved umts terrestrial radio access network, E-UTRAN) including a plurality of eNBs, or a relay station or an access point, or a base station in a future 5$^{th}$-generation mobile communications (the 5th generation mobile communication, 5G) network, or a relay station, an access point, an in-vehicle device, a wearable device, or the like that operates in a high frequency band. This is not limited herein in this application.

A terminal device may be a wireless terminal or a wired terminal. The wireless terminal may refer to a device that provides a user with voice and/or other service data connectivity, a handheld device with a radio connection function, or another processing device connected to a radio modem. The wireless terminal may communicate with one or more core networks through a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile console (mobile console), a remote station (remote station), a remote terminal (remote terminal), an access terminal (access terminal), a user terminal (user terminal), a user agent (user agent), UE. The present invention is not limited thereto.

Two modes (modem) are deployed in both the network device and the terminal device, that is, both the network device and the terminal device can operate in two operating modes. One mode may be used as an LTE communications system, and the other mode may be a new radio (new radio, NR) communications system, for example, a 5$^{th}$-generation mobile communications technology (5th-generation, 5G). An LTE side of the terminal device communicates with an LTE side of the network device, and an NR side of the terminal device communicates with an NR side of the network device. When the two modes of the network device and the terminal device are an LTE mode and an NR mode, an EUTRAN NR dual connection (EUTRAN NR dual connection, EN-DC) technology may be used, so that the network device and the terminal device support simultaneous communication in the two modes.

Based on radio frequency indicators, EN-DC dual connectivity technologies may be classified into inter-band EN-DC (inter-band EN-DC) and intra-band EN-DC (intra-band EN-DC). The intra-band EN-DC dual connectivity refers to that an LTE carrier and an NR carrier are in a same band (band) in a dual connectivity combination. In the intra-band EN-DC, the LTE carrier is very close to the NR carrier, and an intermodulation product exists during uplink dual transmission, affecting a corresponding radio frequency (radio frequency, RF) indicator of LTE and NR. Therefore, a transmit power of LTE and a transmit power of NR need to be reduced during dual transmission, to reduce mutual interference during uplink dual transmission and avoid a harmonic wave caused by intermodulation. An indicator for reducing the transmit power is specifically an AMPR. After determining the AMPR, a terminal device may reduce a maximum transmit power of the terminal device based on the AMPR, to reduce interference when the terminal device performs uplink dual transmission.

The AMPR is ideally obtained in the following manner: The terminal device performs calculation based on LTE-side real-time scheduling information and NR-side real-time scheduling information. However, in the intra-band EN-DC technology, the NR-side real-time scheduling information cannot be obtained on an LTE side, and the LTE-side real-time scheduling information can be obtained on an NR side only when dynamic power sharing is supported.

When real-time scheduling information of the other side cannot be obtained on one side of the terminal device, in a conventional communications system, a worst-case estimation manner is used to obtain an AMPR in a worst case. For example, the NR-side real-time scheduling information cannot be obtained on the LTE side. The terminal device assumes that information about a resource block allocated to the NR side is one RB. In consideration that a smaller quantity of RBs occupied by the terminal device indicates more severe spectral distortion, the terminal device can obtain a maximum AMPR by assuming that the NR-side real-time scheduling information is one RB. The AMPR in this case is the AMPR in the worst case and is a total power reduction of the terminal device. To calculate an LTE-side power reduction, if a power is allocated to the LTE side and the NR side of the terminal device based on that the NR side occupies only one RB, an excessive power is allocated to the LTE side of the terminal device and a relatively low power is allocated to the NR side. As a result, the LTE-side power reduction may be insufficient, and the power allocated to the NR side is far less than a power actually required on the NR side. This not only does not reduce mutual interference during uplink dual transmission, but also affects uplink coverage on the NR side. Therefore, the LTE-side AMPR may be calculated by assuming that the NR side occupies a maximum quantity of RBs, so that the LTE-side AMPR is sufficiently large and the power reduction is sufficiently large, and it is ensured that this reduces mutual interference during uplink dual transmission and avoids impact on uplink coverage on the NR side.

However, the conventional worst-case AMPR estimation manner causes an excessively strict power reduction indicator and deterioration of an uplink transmit power, affecting uplink coverage of the intra-band EN-DC. In addition, it is assumed that a maximum quantity of RBs is allocated to the peer side during power allocation, further deteriorating an uplink transmit power. A large power reduction is unnecessarily performed. The conventional AMPR configuration manner is inappropriate.

To resolve the foregoing problem, this application provides a power determining method and apparatus, to avoid an excessively strict power reduction indicator, ensure an uplink transmit power, and optimize uplink coverage of the intra-band EN-DC. Compared with a power determining method in an existing communications system, the power determining method is more appropriate. The following uses detailed embodiments to describe in detail the power determining method and apparatus provided in this application.

According to an aspect of the embodiments of this application, a power determining method is provided. When NR-side real-time scheduling information cannot be obtained on an LTE side of a terminal device, an AMPR is estimated based on NR-side semi-static configuration information, thereby making the power determining method more appropriate.

FIG. 2 is a schematic flowchart of a power determining method according to Embodiment 1 of this application. The method may be executed by the terminal device in FIG. 1. As shown in FIG. 2, the power determining method includes the following steps.

S201. The terminal device obtains an LTE-side AMPR of the terminal device based on NR-side semi-static configuration information and LTE-side real-time scheduling information of the terminal device.

The semi-static configuration information includes NR-side BWP information of the terminal device.

For example, the NR-side semi-static configuration information of the terminal device is configured by a network device for the terminal device. In this embodiment, the terminal device supports dynamic power sharing. Therefore, the NR-side semi-static configuration information may be obtained on the LTE side of the terminal device, and the LTE-side AMPR is obtained based on the NR-side semi-static configuration information. For example, an NR protocol stipulates that four BWPs are configured for the NR side on each carrier by using radio resource control (radio resource control, RRC), and only one BWP is activated. The network device may schedule some or all RB resources within a bandwidth range of the activated BWP. The semi-static configuration information includes bandwidth, carrier frequency location, and subcarrier space (subcarrier space, SCS) information of the BWPs. Therefore, the LTE-side AMPR may be calculated on the LTE side based on bandwidth information of one of the four BWPs. Therefore, the LTE-side AMPR is estimated based on the NR-side semi-static configuration information of the terminal device. Compared with a conventional AMPR configuration estimated in a worst case, an AMPR configuration can be more appropriate. A power obtained based on the APMR can avoid deterioration of an uplink transmit power and ensure uplink coverage of intra-band EN-DC.

Optionally, a process of estimating the LTE-side AMPR based on the NR-side semi-static configuration information of the terminal device may be specifically as follows:
S11: The terminal device obtains an LTE-side resource block allocation ratio of the terminal device based on first BWP information and the LTE-side real-time scheduling information.

The first BWP information is information about a quantity of resource blocks in a BWP with a minimum bandwidth in the semi-static configuration information. The resource block allocation ratio is a ratio of a quantity of resource blocks allocated to the terminal device to a quantity of resource blocks in a transmission bandwidth.

For example, the terminal device may determine the BWP with a minimum bandwidth based on the NR-side semi-static configuration information, and use the BWP as a first BWP. A quantity of RBs in the first BWP may be considered as a minimum quantity of RBs allocated to the NR side. An NR-side resource block allocation ratio obtained when it is assumed that NR-side scheduling information includes the quantity of RBs in the first BWP is more appropriate than that obtained when it is assumed that a quantity of RBs on the NR side is 1.

Optionally, the terminal device obtains the LTE-side resource block allocation ratio A1 of the terminal device based on the first BWP information and the LTE-side real-time scheduling information by using the following formula 1:

$$A1 = \frac{L_{CRB,LTE} + BWP1_{NR}}{N_{RB,LTE} + N_{RB,NR}} \qquad \text{formula 1,}$$

where

$L_{CRB,LTE}$ is the quantity of resource blocks allocated in the LTE-side real-time scheduling information, $BWP1_{NR}$ is a quantity of resource blocks in the NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

S12: The terminal device obtains an LTE-side power adjustment value of the terminal device based on second BWP information and the LTE-side real-time scheduling information.

The second BWP information is information about a quantity of resource blocks in a BWP with a maximum bandwidth in the semi-static configuration information. The power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP.

For example, after the resource block allocation ratio A1 is calculated, a total AMPR of the terminal device may be obtained based on A1. In this case, an LTE-side transmit power and an NR-side transmit power of the terminal device do not exceed a maximum total power minus the total AMPR. However, the LTE-side AMPR and an NR-side AMPR are unclear. Therefore, the LTE-side AMPR needs to be further calculated.

In a process of calculating the LTE-side AMPR, if the LTE-side AMPR is obtained still based on the first BWP information, because the quantity of RBs in the first BWP is excessively small and a larger quantity of RBs indicates higher allocated power, a power reduction is excessively large and allocated power is excessively high on the LTE side. Therefore, the LTE-side power adjustment value is calculated based on the second BWP information.

Optionally, the terminal device obtains the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE} + BWP4_{NR}} \qquad \text{formula 2,}$$

where

$L_{CRB,LTE}$ is the quantity of resource blocks allocated in the LTE-side real-time scheduling information, and $BWP4_{NR}$ is the quantity of resource blocks in the NR-side second BWP.

S13: The terminal device obtains the LTE-side AMPR of the terminal device based on the resource block allocation ratio and the power adjustment value.

For example, the terminal device obtains the AMPR based on the resource block allocation ratio A1 and the power adjustment value $\Delta_{LTE}$ in the following manners:

When the terminal device uses an OFDM waveform, M is obtained by using the following formula 3:

$$M = \begin{cases} 10.00 - 11.67 \times A1 & 0.00 < A1 \le 0.30 \\ 7.10 - 2.00 \times A1 & 0.30 < A1 \le 0.80 \\ 5.50 & 0.80 < A1 \le 1.00 \end{cases} \quad \text{formula 3.}$$

When the terminal device uses a DFT-S-OFDM waveform, M is obtained by using the following formula 4:

$$M = \begin{cases} 10.00 - 13.33 \times A1 & 0.00 < A1 \le 0.30 \\ 7.00 - 3.33 \times A1 & 0.30 < A1 \le 0.60 \\ 5.00 & 0.60 < A1 \le 1.00 \end{cases} \quad \text{formula 4.}$$

After M is obtained, $M_{LTE}$ is obtained by using the following formula 5:

$$M_{LTE} = M(A1) - \Delta_{LTE} \quad \text{formula 5.}$$

After $M_{LTE}$ is obtained, the LTE-side AMPR of the terminal device is obtained by using the following formula 6:

$$\text{AMPR} = \text{CEIL}\{M_{LTE}, 0.5\} \quad \text{formula 6.}$$

The CEIL function returns a minimum number not less than M, and the AMPR is an integer or a number in a form of N.5, where N is an integer.

S202: The terminal device determines an LTE-side configured maximum power of the terminal device based on the LTE-side AMPR.

For example, after the LTE-side AMPR and the NR-side AMPR of the terminal device are obtained, the configured maximum power ($P_{CMAX,f,c}$) may be calculated. As shown in the following formula 7, a power control process is performed, and the calculated configured maximum power is reported to the network device:

$$P_{CMAX_L,f,c} \le P_{CMAX,f,c} \le P_{CMAX\_H,f,c}$$

$$P_{CMAX\_L,f,c} = \text{MIN} \left\{ \begin{array}{l} P_{EMAX,c} - \Delta\ T_{C,c}, (P_{\text{PowerClass}} - \Delta P_{\text{PowerClass}}) - \\ \text{MAX}(\text{MPR}_C + A - \text{MPR}_c + \Delta\ T_{IB,c} + \Delta\ T_{C,c} + \Delta\ T_{ProSe}, P - MPR_c) \end{array} \right\} \quad \text{formula 7.}$$

$$P_{CMAX\_H,f,c} = \text{MIN} \left\{ P_{EMAX,c}, P_{\text{PowerClass}} - \Delta P_{\text{PowerClass}} \right\}$$

$P_{EMAX,c}$ is a cell-level power configuration value delivered by the network device. $P_{\text{PowerClass}}$ is a maximum transmit power reported by the terminal device based on a capability. In formula 7, $P_{CMAX,f,c}$ is a configured power of the terminal device in an LTE or NR cell. A lower limit of $P_{CMAX,f,c}$ is $P_{CMAX\_L,f,c}$, and an upper limit of $P_{CMAX,f,c}$ is $P_{CMAX\_H,f,c}$. $P_{EMAX,c}$ is a maximum allowable transmit power configured by a network side for a terminal by using RRC signaling. $P_{\text{PowerClass}}$ is a maximum allowable transmit power that can be implemented by the terminal device in an LTE cell group. $\Delta P_{\text{PowerClass}}$ is a power adjustment value of the terminal device at a power class in some cases. MPRc is a maximum power reduction, and is a power reduction for different bandwidths and RB allocations under a requirement of a plurality of radio frequency indicators. A-MPRc is an additional power reduction, and is a power that may be further reduced based on an MPR reduction in some pieces of network signaling. P-MPRc is a power reduction defined in consideration that a specific absorption rate (specific absorption rate) meets a criterion. $\Delta T_{IB,c}$ is a transmit power tolerance in consideration of carrier aggregation. $\Delta T_{C,c}$ is a transmit power tolerance at an edge of a band. $\Delta T_{ProSe}$ is a transmit power tolerance of a proximity communication service (proximity service, ProSe) supported by LTE (for example, a D2D service of LTE).

S203: The terminal device sends the LTE-side configured maximum power to the network device.

For example, the terminal device performs power control, and reports the LTE-side configured maximum power to the network device by using power headroom reporting (power headroom reporting, PHR) information.

For example, the terminal device sends the obtained configured maximum power to the network device, so that the network device performs configuration for the terminal device based on the configured maximum power, and the LTE-side transmit power of the terminal device does not exceed the configured maximum power.

The power determining method provided in this embodiment of this application includes: the terminal device obtains the LTE-side AMPR of the terminal device based on the NR-side semi-static configuration information and the LTE-side real-time scheduling information of the terminal device; and the terminal device determines the LTE-side configured maximum power of the terminal device based on the LTE-side AMPR, and sends the LTE-side configured maximum power to the network device. In the power determining method provided in this embodiment, the LTE-side AMPR is obtained based on the NR-side semi-static configuration information and the LTE-side real-time scheduling information, so that an AMPR indicator is optimized, uplink coverage of the terminal device is improved, and that a radio frequency indicator cannot meet a criterion is avoided. The power determining method provided in this embodiment is more appropriate.

Optionally, based on the embodiment shown in FIG. 2, an embodiment of this application further provides a power determining method. In this embodiment, different power determining methods are used based on different cell locations of the terminal device, to further optimize an AMPR indicator, so that a power reduction of the terminal device is more flexible.

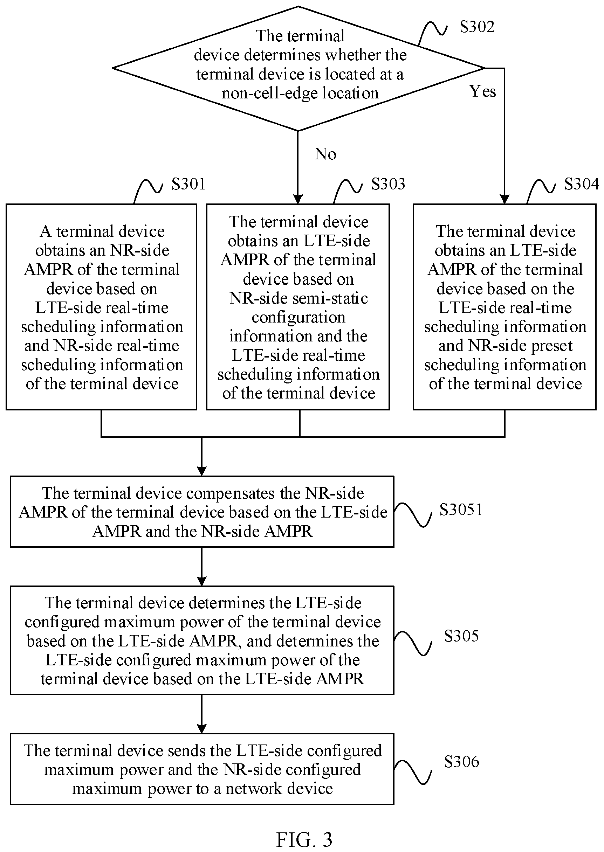

FIG. 3 is a schematic flowchart of a power determining method according to Embodiment 2 of this application. As shown in FIG. 3, the method includes the following steps.

S301: The terminal device obtains an NR-side AMPR of the terminal device based on the LTE-side real-time scheduling information and NR-side real-time scheduling information of the terminal device.

For example, when the terminal device supports dynamic power sharing, the network device performs power configuration at an RRC level for the terminal device, and the terminal device may determine a real-time power at a downlink control information DCI level, to determine whether real-time powers on carriers of two modes exceeds a total rated power. In this case, the LTE-side real-time scheduling information of the terminal device may be obtained on the NR side of the terminal device. Optionally, the real-time scheduling information includes RB allocation information.

Optionally, the AMPR obtained based on the real-time scheduling information on both sides of the terminal device is an optimal AMPR. For example, the optimal AMPR may be obtained as follows:

S21: The terminal device obtains an NR-side resource block allocation ratio A3 of the terminal device based on the LTE-side real-time scheduling information and the NR-side real-time scheduling information of the terminal device by using the following formula 8:

$$A3 = \frac{L_{CRB,LTE} + L_{CRB,NR}}{N_{RB,LTE} + N_{RB,NR}} \qquad \text{formula 8,}$$

where

$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

For example, a quantity of real-time resource blocks indicated by $L_{CRB}$ is a quantity of consecutive RBs actually scheduled in a network.

S22. The terminal device obtains the NR-side AMPR of the terminal device based on the NR-side resource block allocation ratio A3.

For example, the terminal device may replace A1 with the resource block allocation ratio A3 in the foregoing formula 3 or formula 4 for obtaining M, to obtain the NR-side AMPR.

After M is obtained, the NR-side AMPR of the terminal device is obtained by using the following formula 9:

$$AMPR = CEIL\{M, 0.5\} \qquad \text{formula 9.}$$

S302. The terminal device determines whether the terminal device is located at a non-cell-edge location. If the terminal device is located at a non-cell-edge location, S303 is performed. If the terminal device is located at a cell-edge location, S304 is performed.

For example, when the terminal device obtains the LTE-side AMPR, in consideration that as the terminal device is closer to a cell-edge location, a quantity of RBs allocated to the terminal device is smaller, different AMPR obtaining manners may be used based on different cell locations of the terminal device. For example, the terminal device obtains path loss information of the terminal device. For example, the terminal device obtains the path loss information (path loss) based on a measurement report. The path loss information is obtained by subtracting signal strength measured by the terminal device from path loss reference information sent by a network to the terminal device.

Optionally, when the path loss information is less than a path loss threshold, the terminal device determines that the terminal device is located at a non-cell-edge location.

For example, the terminal device compares the path loss information with the path loss threshold based on the obtained path loss information. In consideration that a longer distance from a cell center within a cell range indicates a higher path loss, when the path loss information of the terminal device is relatively small and is less than the path loss threshold, it may be considered that the terminal device is located at a non-cell-edge location.

S303: The terminal device obtains the LTE-side AMPR of the terminal device based on the NR-side semi-static configuration information and the LTE-side real-time scheduling information of the terminal device.

S303 in this embodiment is the same as or similar to S201 in the embodiment shown in FIG. 2. Details are not described again in this application.

S304: The terminal device obtains the LTE-side AMPR of the terminal device based on the LTE-side real-time scheduling information and NR-side preset scheduling information of the terminal device.

For example, when the terminal device is located at a cell-edge location, a relatively small quantity of resources are scheduled and allocated for the terminal device in real time. The LTE-side AMPR may be obtained by using the NR-side preset scheduling information. In this case, the obtained AMPR is an AMPR in a worst case.

For example, the NR-side preset scheduling information includes 1 and $\tilde{N}_{RB,NR}$. 1 indicates that a preset quantity of resource blocks allocated to the NR side is 1 RB, and $\tilde{N}_{RB,NR}$ indicates a quantity of resource blocks in a channel bandwidth configuration. $\tilde{N}_{RB,NR}$ is a transmission bandwidth configuration obtained when an SCS is 15 kHz in a secondary cell group (Second cell group, SCG).

During obtaining of the LTE-side AMPR based on the NR-side preset scheduling information, an LTE-side resource block allocation ratio A4 of the terminal device is first obtained on the LTE side of the terminal device by using the following formula 10:

$$A4 = \frac{L_{CRB,LTE}+\text{k}}{N_{RB,LTE}+\tilde{N}_{RB,NR}} \qquad \text{formula 10,}$$

where

$L_{CRB,LTE}$ is a quantity of resource blocks allocated in the LTE-side real-time scheduling information, K is a quantity of resource blocks allocated in the NR-side preset scheduling information, $N_{RB,LTE}$ is a quantity of resource blocks in a transmission bandwidth in the LTE-side real-time scheduling information, and $\tilde{N}_{RB,NR}$ is a quantity of resource blocks in a channel bandwidth configuration in the NR-side preset scheduling information. For example, K may be 1.

A difference from formula 1 lies in that $BWP1_{NR}$ in formula 1 is replaced by K, and $N_{RB,NR}$ in formula 1 is replaced by $\tilde{N}_{RB,NR}$.

Then, an LTE-side power adjustment value $\Delta_{LTE}$ of the terminal device is obtained by using the following formula 11:

$$\Delta_{LTE} = 10 \ log_{10} \frac{L_{CRB,LTE}}{L_{CRB,LTE}+\tilde{N}_{RB,NR}} \qquad \text{formula 11.}$$

A difference from formula 2 lies in that $BWP4_{NR}$ in formula 2 is replaced by $\tilde{N}_{RB,NR}$.

Finally, the LTE-side AMPR is obtained based on A4 and $\Delta_{LTE}$ by using the foregoing formula 3 to formula 6.

For example, referring to the foregoing steps, when the terminal device is located at a cell-edge location and the NR-side real-time scheduling information cannot be obtained on the LTE side of the terminal device, to ensure that the terminal device does not violate a radio frequency indicator and does not generate excessive radiation interference when performing uplink dual transmission, a power reduction should be as large as possible. In consideration of the worst power reduction scenario, that is, assuming that one RB is allocated to the NR side, the LTE-side AMPR is calculated under the worst assumption.

In this case, the calculated AMPR is a common power reduction indicator for the NR side and the LTE side of the terminal device. The total transmit power for the NR side and the LTE side of the terminal device should not exceed $P_{powerclass}$-AMPR. If powers are allocated to the NR side and the LTE side of the terminal device based on the LTE-side real-time scheduling information and one RB on the NR side, because a larger quantity of RBs allocated in real time indicates a higher power, an excessively low power may be allocated to the NR side.

Therefore, during calculation of the LTE-side AMPR, it needs to be assumed that the quantity of RBs allocated to the NR side is a maximum quantity of RBs, that is, the quantity of RBs on the NR side is $\tilde{N}_{RB,NR}$. When a maximum quantity of RBs is allocated to the NR side, the power adjustment value $\Delta_{LTE}$ is calculated.

S305: The terminal device determines the LTE-side configured maximum power of the terminal device based on the LTE-side AMPR, and determines the LTE-side configured maximum power of the terminal device based on the LTE-side AMPR.

S306. The terminal device sends the LTE-side configured maximum power and the NR-side configured maximum power to the network device.

According to the power determining method provided in this embodiment of this application, in consideration that a relatively small quantity of RBs are allocated to the terminal device at a cell-edge location, when the terminal device is located at a cell-edge location, the LTE-side AMPR is obtained by using a worst-case AMPR algorithm, or when the terminal device is located at a non-cell-edge location, the LTE-side AMPR is obtained by using an AMPR algorithm in the embodiment shown in FIG. 2. In this way, the AMPR is more appropriate, the AMPR indicator is optimized, the uplink coverage of the terminal device is improved, and that the radio frequency indicator exceeds a criterion is avoided. The power determining method provided in this embodiment is more appropriate.

Optionally, based on the embodiment shown in FIG. 3, to further make the power determining method more appropriate and avoid power waste caused by an excessive power reduction, an embodiment of this application further provides a power determining method. In this embodiment, in consideration that the LTE-side AMPR estimated in a worst case causes an excessive power reduction of the terminal device, a method for compensating a local side with an excessive power reduction of a peer side is used to further make the power determining method more appropriate.

As shown in FIG. 3, before S305 is performed, the power determining method includes:
S3051: The terminal device compensates the NR-side AMPR of the terminal device based on the LTE-side AMPR and the NR-side AMPR.

For example, for the terminal device supporting dynamic power sharing, the LTE-side real-time scheduling information may be obtained on the NR side. Therefore, an approximate LTE-side AMPR estimated on the LTE side and an optimal LTE-side AMPR may be obtained on the NR side based on the LTE-side real-time scheduling information. In this case, the NR side may be compensated with a difference between the AMPR estimated on the LTE side and the optimal AMPR, to avoid power waste and improve uplink coverage.

For example, a spectral density difference between a compensated NR-side transmit power and an NR-side transmit power should fall within a preset difference range. In addition, it can be further ensured that the NR-side AMPR in intra-band EN-DC does not exceed a value $MPR_{NR,c,f}+AMPR_{NR,c,f}$ in single-mode transmission. $MPR_{NR,c,f}$ is a power reduction in NR single-mode transmission. $AMPR_{NR,c,f}$ is an additional power reduction in NR single-mode transmission.

Optionally, the terminal device may obtain the LTE-side AMPR of the terminal device based on the NR-side semi-static configuration information and the LTE-side real-time scheduling information of the terminal device, or in a manner of obtaining the LTE-side AMPR in a worst case. That is, the LTE-side AMPR in S3051 may be from S303 or S304.

Optionally, a process of compensating the NR-side AMPR specifically includes:
S31: The terminal device obtains a difference between the NR-side AMPR and the LTE-side AMPR.

For example, the optimal LTE-side AMPR is the same as the NR-side AMPR of the terminal device. Therefore, a difference between the LTE-side AMPR and the NR-side AMPR may be obtained based on the NR-side AMPR and the LTE-side AMPR.

S32: The terminal device compensates the NR-side AMPR of the terminal device based on the difference.

For example, the terminal device adds the difference calculated in S31 to the NR-side AMPR or subtracts the difference calculated in S31 from the NR-side AMPR, to compensate the NR-side AMPR of the terminal device.

For example, the terminal device may further compensate the NR-side AMPR by comparing a spectral density difference between the LTE-side power and the NR-side power on the NR side, because the NR side has scheduling information of two modes of the LTE side and the NR side. When the spectral density difference between the powers exceeds a preset difference, the NR-side transmit power is further reduced, that is, the NR-side AMPR is increased.

Further, the terminal device may perform a minimizing operation on the NR-side AMPR in intra-band EN-DC obtained in the foregoing step and MPR+AMPR in NR single-mode transmission, to ensure that the NR-side AMPR in intra-band EN-DC does not exceed MPR+AMPR in single-mode transmission.

In the power determining method provided in this embodiment, the terminal device compensates the NR-side AMPR of the terminal device based on the LTE-side AMPR and the NR-side AMPR. The method of compensating the local side with the excessive power reduction of the peer side is used to further make the power determining method more appropriate.

According to another aspect of the embodiments of this application, a power determining method is further provided. When an LTE side and an NR side of a terminal device that does not support dynamic power adjustment may not be capable of interacting with each other, a proper power is obtained by using a statistics collection method.

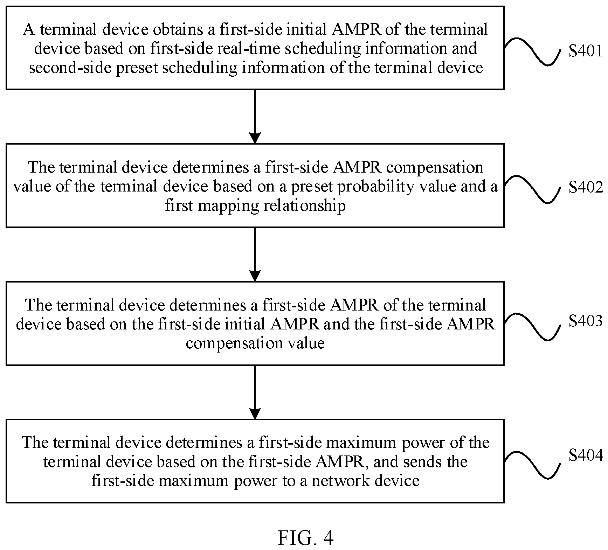

FIG. 4 is a schematic flowchart of a power determining method according to Embodiment 3 of this application. As shown in FIG. 4, the power determining method includes:
S401: A terminal device obtains a first-side initial AMPR of the terminal device based on first-side real-time scheduling information and second-side preset scheduling information of the terminal device.

For example, two sides of the terminal device in this embodiment do not support dynamic power adjustment. For the first side that is of the terminal device and on which an optimal AMPR cannot be obtained and an AMPR cannot be obtained based on semi-static configuration information of a peer side, the first-side initial AMPR of the terminal device is obtained by using the method for obtaining an AMPR in a worst case in the foregoing embodiment.

S402: The terminal device determines a first-side AMPR compensation value of the terminal device based on a preset probability value and a first mapping relationship.

The first mapping relationship is a mapping relationship between an AMPR compensation value and a probability value, and the first mapping relationship indicates a probability of overcompensating the initial AMPR when the initial AMPR is compensated with different AMPR compensation values.

For example, when the terminal device determines a configured maximum power of the terminal device based on the initial AMPR, a reduction is excessively large. Therefore, power compensation may be performed for the AMPR. The first mapping relationship may be obtained by collecting statistics on overcompensation probabilities that may be caused by different compensation values. Therefore, after the initial AMPR of the terminal device is obtained, an AMPR compensation value that needs to be compensated may be determined based on a preset probability value specified by a user. The preset probability value a indicates that a probability that current AMPR compensation is not overcompensation is (1-a).

S403: The terminal device determines a first-side AMPR of the terminal device based on the first-side initial AMPR and the first-side AMPR compensation value.

For example, the terminal device may determine the first-side AMPR of the terminal device by adding the AMPR compensation value to the initial AMPR or subtracting the AMPR compensation value from the initial AMPR.

S404: The terminal device determines a first-side maximum power of the terminal device based on the first-side AMPR, and sends the first-side maximum power to a network device.

For example, S404 in this embodiment is the same as or similar to S202 and S203 in the embodiment shown in FIG. 2. Details are not described again in this application.

For example, one of the first side and the second side is an LTE side, and the other is an NR side.

The power determining method provided in this embodiment of this application includes: the terminal device obtains the first-side initial AMPR of the terminal device based on the first-side real-time scheduling information and the second-side preset scheduling information of the terminal device, the terminal device determines the first-side AMPR compensation value of the terminal device based on the preset probability value and the first mapping relationship, the terminal device determines the first-side AMPR of the terminal device based on the first-side initial AMPR and the first-side AMPR compensation value, and the terminal device determines the first-side maximum power of the terminal device based on the first-side AMPR, and sends the first-side maximum power to the network device. Overcompensation probabilities that may be caused by different compensation values may be obtained by using the statistics collection method, to obtain the first mapping relationship. A power that meets a user requirement may be determined based on the first mapping relationship and the preset probability value.

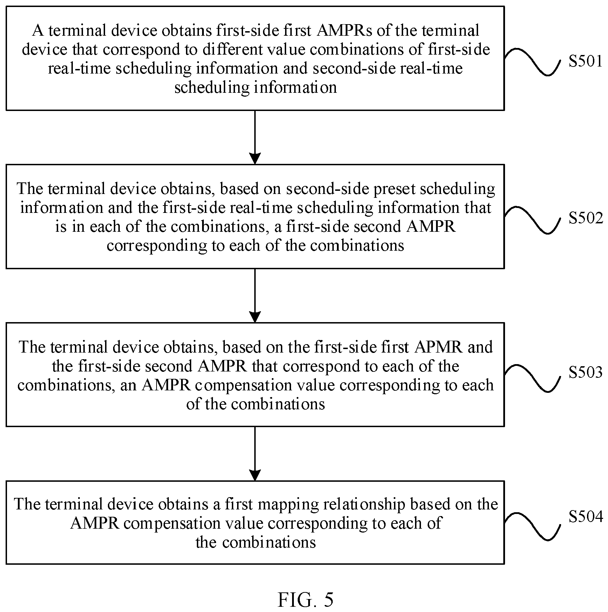

For example, based on the embodiment shown in FIG. 4, this application further provides a power determining method. FIG. 5 is a schematic flowchart of a power determining method according to Embodiment 4 of this application. In this embodiment, a manner of obtaining a cumulative probability curve is described in detail. As shown in FIG. 5, the power determining method further includes:

S501: The terminal device obtains first-side first AMPRs of the terminal device that correspond to different value combinations of first-side real-time scheduling information and second-side real-time scheduling information.

For example, a manner of obtaining the first AMPR is the manner of obtaining the optimal AMPR in the embodiment shown in FIG. 3.

S502: The terminal device obtains, based on the second-side preset scheduling information and the first-side real-time scheduling information that is in each of the combinations, a first-side second AMPR corresponding to each of the combinations.

For example, a manner of obtaining the second AMPR may be the manner of obtaining the worst-case AMPR in the embodiment shown in FIG. 3.

S503: The terminal device obtains, based on the first-side first APMR and the first-side second AMPR that correspond to each of the combinations, an AMPR compensation value corresponding to each of the combinations.

S504: The terminal device obtains the first mapping relationship based on the AMPR compensation value corresponding to each of the combinations.

For example, in each case of RB allocation on the LTE side and on the NR side, a unique optimal AMPR is paired with a unique worst-case AMPR. Specifically, for any LTE channel bandwidth, any NR channel bandwidth, any quantity of RBs actually allocated to LTE, and any quantity of RBs actually allocated to NR, there are an optimal AMPR and a worst AMPR that uniquely correspond to each other.

For example, a difference between the optimal AMPR and the worst AMPR is calculated in a same RB configuration. A difference corresponding to each value combination of a bandwidth and an RB configuration may be obtained based on different bandwidths and RB configurations.

A cumulative distribution function chart (CDF chart) is produced by using all differences and probability distribution of the differences is recorded. A peak point (a 100% point) corresponds to a worst case. That is, when AMPR compensation is performed based on this difference, overcompensation certainly occurs. A X% point is selected from the CDF curve, that is, a terminal device with a 1-x% point has no risk that a radio frequency indicator exceeds a criterion. In addition, a power configuration is not performed based on the worst-case AMPR.

For example, in the foregoing embodiments, manners of obtaining the LTE-side AMPR and the NR-side AMPR of the terminal device may be randomly combined if there is no contradiction.

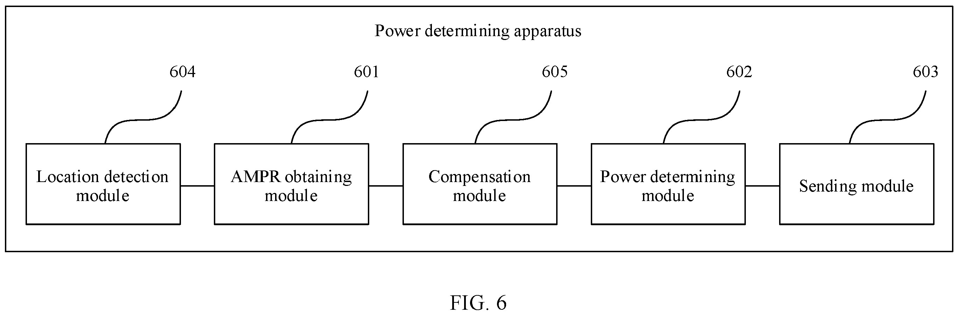

The foregoing describes in detail the power determining methods according to the embodiments of this application with reference to FIG. 1 to FIG. 5. The following describes a power determining apparatus and a device according to the embodiments of this application with reference to FIG. 6 to FIG. 10.

Another aspect of the embodiments of this application further provides a power determining apparatus, configured to perform the power determining method in the foregoing embodiments. The power determining apparatus has the same technical features and technical effects. Details are not described again in this application.

FIG. 6 is a schematic structural diagram of a power determining apparatus according to Embodiment 1 of this application. In this embodiment, the power determining apparatus may be implemented by using software, hardware, or a combination of software and hardware. As shown in FIG. 6, the power determining apparatus includes:

an AMPR obtaining module 601, configured to obtain an LTE-side AMPR of the terminal device based on NR-side semi-static configuration information and LTE-side real-time scheduling information of the terminal device, where the semi-static configuration information includes NR-side BWP information of the terminal device;
a power determining module 602, configured to determine an LTE-side maximum power of the terminal device based on the LTE-side AMPR; and
a sending module 603, configured to send the LTE-side maximum power to a network device.

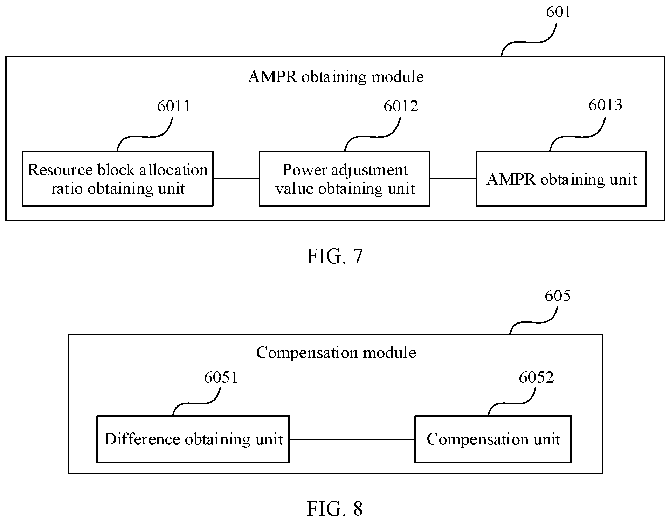

Optionally, based on the embodiment shown in FIG. 6, FIG. 7 is a schematic structural diagram of a power determining apparatus according to Embodiment 2 of this application. As shown in FIG. 7, the AMPR obtaining module 601 includes:

a resource block allocation ratio obtaining unit 6011, configured to obtain an LTE-side resource block allocation ratio of the terminal device based on first BWP information and the LTE-side real-time scheduling information, where the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;
a power adjustment value obtaining unit 6012, configured to obtain an LTE-side power adjustment value of the terminal device based on second BWP information and the LTE-side real-time scheduling information, where the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and
an AMPR obtaining unit 6013, configured to obtain the LTE-side AMPR of the terminal device based on the LTE-side resource block allocation ratio and the LTE-side power adjustment value.

Optionally, the resource block allocation ratio obtaining unit 6011 is specifically configured to:
obtain the LTE-side resource block allocation ratio A1 of the terminal device based on the first BWP information and the LTE-side real-time scheduling information by using the following formula 1:

$$A1 = \frac{L_{CRB,LTE} + BWP1_{NR}}{N_{RB,LTE} + N_{RB,NR}} \qquad \text{formula 1,}$$

where

$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

Optionally, the power adjustment value obtaining unit 6012 is specifically configured to:
obtain the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE} + BWP4_{NR}} \qquad \text{formula 2,}$$

where

$L_{CRB,LTE}$ is the quantity of resource blocks allocated in the LTE-side real-time scheduling information, and $BWP4_{NR}$ is the quantity of resource blocks in the NR-side second BWP.

Optionally, the AMPR obtaining module 601 is further configured to obtain an NR-side AMPR of the terminal device based on the LTE-side real-time scheduling information and NR-side real-time scheduling information of the terminal device;

the power determining module 602 is further configured to determine an NR-side maximum power of the terminal device based on the NR-side AMPR; and

the sending module 603 is further configured to send the NR-side maximum power to the network device.

Optionally, the resource block allocation ratio obtaining unit 6011 is further configured to obtain an NR-side resource block allocation ratio A3 of the terminal device based on the LTE-side real-time scheduling information and the NR-side real-time scheduling information of the terminal device by using the following formula 3, where the resource block allocation ratio is a ratio of a quantity of resource blocks allocated to the terminal device to a quantity of resource blocks in a transmission bandwidth:

$$A3 = \frac{L_{CRB,LTE} + L_{CRB,NR}}{N_{RB,LTE} + N_{RB,NR}} \qquad \text{formula 3;}$$

and

the AMPR obtaining unit 6013 is further configured to obtain the NR-side AMPR of the terminal device based on the NR-side resource block allocation ratio A3, where

$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

Optionally, as shown in FIG. 6, the power determining apparatus further includes:

a location detection module 604, configured to determine whether the terminal device is located at a cell-edge location; and

the AMPR obtaining module 601 is specifically configured to: when the terminal device is located at a non-cell-edge location, obtain the LTE-side AMPR of the terminal device based on the NR-side semi-static configuration information and the LTE-side real-time scheduling information of the terminal device.

Optionally, as shown in FIG. 6, the power determining apparatus further includes:

a compensation module 605, configured to compensate the NR-side AMPR of the terminal device based on the LTE-side AMPR and the NR-side AMPR.

Optionally, based on the embodiment shown in FIG. 6 or FIG. 7, FIG. 8 is a schematic structural diagram of a power determining apparatus according to Embodiment 3 of this application. As shown in FIG. 8, the compensation module 605 includes:

a difference obtaining unit 6051, configured to obtain a difference between the NR-side AMPR and the LTE-side AMPR; and

a compensation unit 6052, configured to compensate the NR-side AMPR of the terminal device based on the difference.

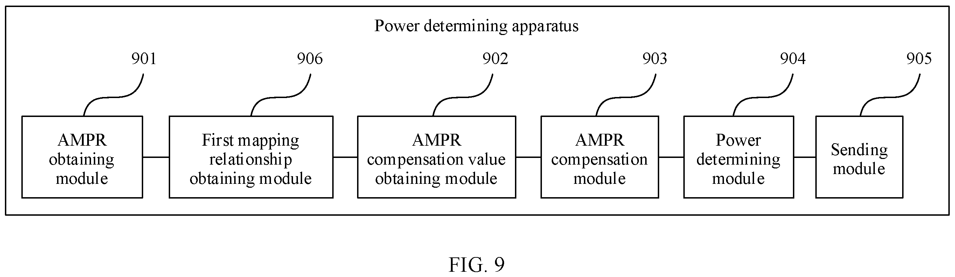

FIG. 9 is a schematic structural diagram of a power determining apparatus according to Embodiment 4 of this application. As shown in FIG. 9, the power determining apparatus includes:

an AMPR obtaining module 901, configured to obtain a first-side initial AMPR of the terminal device based on first-side real-time scheduling information and second-side preset scheduling information of the terminal device;

an AMPR compensation value obtaining module 902, configured to determine a first-side AMPR compensation value of the terminal device based on a preset probability value and a first mapping relationship, where the first mapping relationship is a mapping relationship between an AMPR compensation value and a probability value, and the first mapping relationship indicates a probability of overcompensating the initial AMPR when the initial AMPR is compensated with different AMPR compensation values;

an AMPR compensation module 903, configured to determine a first-side AMPR of the terminal device based on the first-side initial AMPR and the first-side AMPR compensation value;

a power determining module 904, configured to determine a first-side maximum power of the terminal device based on the first-side AMPR; and

a sending module 905, configured to send the first-side maximum power to a network device, where

one of the first side and the second side is an LTE side, and the other is an NR side.

Optionally, the AMPR obtaining module 901 is further configured to obtain first-side first AMPRs of the terminal device that correspond to different value combinations of first-side real-time scheduling information and second-side real-time scheduling information; and
the AMPR obtaining module 902 is further configured to obtain, based on the second-side preset scheduling information and the first-side real-time scheduling information that is in each of the combinations, a first-side second AMPR corresponding to each of the combinations.

Optionally, as shown in FIG. 9, the power determining apparatus further includes:
a first mapping relationship obtaining module 906, configured to: obtain, based on the first-side first APMR and the first-side second AMPR that correspond to each of the combinations, an AMPR compensation value corresponding to each of the combinations, and obtain the first mapping relationship based on the AMPR compensation value corresponding to each of the combinations.

Optionally, the AMPR obtaining module 901 is the same as the AMPR obtaining module 601 in the embodiment shown in FIG. 7, and includes:

a resource block allocation ratio obtaining unit, configured to obtain a first-side resource block allocation ratio A4 of the terminal device based on the first-side real-time scheduling information and the second-side preset scheduling information of the terminal device by using the following formula 4, where the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4};$$

a power adjustment value obtaining unit, configured to obtain a first-side power adjustment value $\Delta_1$ of the terminal device based on the first-side real-time scheduling information and the second-side preset scheduling information of the terminal device by using the following formula 5, where the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5};$$

and

an AMPR obtaining unit, configured to obtain the first-side initial AMPR of the terminal device based on the resource block allocation ratio A4 and the power adjustment value $\Delta_1$, where
$L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, $\tilde{N}_{RB,2}$ is a quantity of resource blocks in a channel bandwidth configuration in the second-side preset scheduling information.

Optionally, the first side is an NR side, and the second side is an LTE side;
the AMPR obtaining module 901 is further configured to obtain an LTE-side AMPR of the terminal device based on NR-side semi-static configuration information and LTE-side real-time scheduling information of the terminal device, where the semi-static configuration information includes NR-side bandwidth part BWP information of the terminal device;
the power determining module 904 is further configured to determine an LTE-side maximum power of the terminal device based on the LTE-side AMPR; and
the sending module 905 is further configured to send the LTE-side maximum power to the network device.

According to another aspect of the embodiments of this application, a terminal device is further provided, configured to perform the power determining methods in the foregoing embodiments. The terminal device has the same technical features and technical effects. Details are not described again in this application.

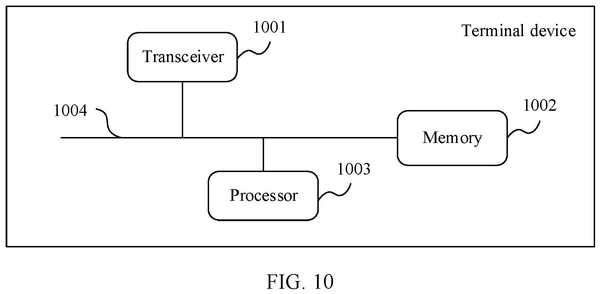

FIG. 10 is a schematic structural diagram of a terminal device according to Embodiment 1 of this application. As shown in FIG. 10, the terminal device includes: a transceiver 1001, a memory 1002, a processor 1003, and at least one communications bus 1004. The communications bus 1004 is configured to implement communication and connection between components. The memory 1002 may include a high-speed random access memory, or may further include a nonvolatile memory, for example, at least one magnetic disk memory. The memory 1002 may store various programs, configured to perform various processing functions and the steps of the methods in the embodiments. The processor 1003 is configured to execute the programs stored in the memory 1002. In this embodiment, the transceiver 1001 may be a radio frequency processing module or a baseband processing module in the terminal device, and the transceiver 1001 is coupled to the processor 1003.

The processor 1003 is configured to obtain an LTE-side AMPR of the terminal device based on NR-side semi-static configuration information and LTE-side real-time scheduling information of the terminal device, where the semi-static configuration information includes NR-side BWP information of the terminal device;
the processor 1003 is further configured to determine an LTE-side maximum power of the terminal device based on the LTE-side AMPR; and
the transceiver 1001 is configured to send the LTE-side maximum power to a network device.

Optionally, the processor 1003 is specifically configured to:

obtain an LTE-side resource block allocation ratio of the terminal device based on first BWP information and the LTE-side real-time scheduling information, where the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;
obtain an LTE-side power adjustment value of the terminal device based on second BWP information and the LTE-side real-time scheduling information, where the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and
obtain the LTE-side AMPR of the terminal device based on the LTE-side resource block allocation ratio and the LTE-side power adjustment value.

Optionally, the processor 1003 is specifically configured to:
obtain the LTE-side resource block allocation ratio A1 of the terminal device based on the first BWP information and the LTE-side real-time scheduling information by using the following formula 1:

$$A1 = \frac{L_{CRB,LTE} + BWP1_{NR}}{N_{RB,LTE} + N_{RB,NR}} \qquad \text{formula 1,}$$

where
$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

Optionally, the processor 1003 is specifically configured to:
obtain the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE} + BWP4_{NR}} \qquad \text{formula 2,}$$

where
$L_{CRB,LTE}$ is the quantity of resource blocks allocated in the LTE-side real-time scheduling information, and $BWP4_{NR}$ is the quantity of resource blocks in the NR-side second BWP.

Optionally, the processor 1003 is further configured to: obtain an NR-side AMPR of the terminal device based on the LTE-side real-time scheduling information and NR-side real-time scheduling information of the terminal device, and determine an NR-side maximum power of the terminal device based on the NR-side AMPR; and
the transceiver 1001 is further configured to send the NR-side maximum power to the network device.

Optionally, the processor 1003 is further configured to: obtain an NR-side resource block allocation ratio A3 of the terminal device based on the LTE-side real-time scheduling information and the NR-side real-time scheduling information of the terminal device by using the following formula 3, where the resource block allocation ratio is a ratio of a quantity of resource blocks allocated to the terminal device to a quantity of resource blocks in a transmission bandwidth:

$$A3 = \frac{L_{CRB,LTE} + L_{CRB,NR}}{N_{RB,LTE} + N_{RB,NR}} \qquad \text{formula 3;}$$

and

obtain the NR-side AMPR of the terminal device based on the NR-side resource block allocation ratio A3, where $L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

Optionally, the processor 1003 determines whether the terminal device is located at a cell-edge location; and the processor 1003 is specifically configured to: when the terminal device is located at a non-cell-edge location, obtain the LTE-side AMPR of the terminal device based on the NR-side semi-static configuration information and the LTE-side real-time scheduling information of the terminal device.

Optionally, the processor 1003 is further configured to compensate the NR-side AMPR of the terminal device based on the LTE-side AMPR and the NR-side AMPR.

Optionally, the processor 1003 is specifically configured to:

obtain a difference between the NR-side AMPR and the LTE-side AMPR; and
compensate the NR-side AMPR of the terminal device based on the difference.

According to another aspect of this application, a terminal device is further provided. Referring to FIG. 10, a processor 1003 is configured to obtain a first-side initial AMPR of the terminal device based on first-side real-time scheduling information and second-side preset scheduling information of the terminal device;

the processor 1003 is further configured to determine a first-side AMPR compensation value of the terminal device based on a preset probability value and a first mapping relationship, where the first mapping relationship is a mapping relationship between an AMPR compensation value and a probability value, and the first mapping relationship indicates a probability of overcompensating the initial AMPR when the initial AMPR is compensated with different AMPR compensation values;
the processor 1003 is further configured to determine a first-side AMPR of the terminal device based on the first-side initial AMPR and the first-side AMPR compensation value;
the processor 1003 is further configured to determine a first-side maximum power of the terminal device based on the first-side AMPR; and
a transceiver 1001 is configured to send the first-side maximum power to a network device, where
one of the first side and the second side is an LTE side, and the other is an NR side.

Optionally, the processor 1003 is further configured to: obtain first-side first AMPRs of the terminal device that correspond to different value combinations of first-side real-time scheduling information and second-side real-time scheduling information;
obtain, based on the second-side preset scheduling information and the first-side real-time scheduling information that is in each of the combinations, a first-side second AMPR corresponding to each of the combinations; and
obtain, based on the first-side first APMR and the first-side second AMPR that correspond to each of the combinations, an AMPR compensation value corresponding to each of the combinations, and obtain the first mapping relationship based on the AMPR compensation value corresponding to each of the combinations.

Optionally, the processor 1003 is further configured to obtain a first-side resource block allocation ratio A4 of the terminal device based on the first-side real-time scheduling information and the second-side preset scheduling information of the terminal device by using the following formula 4, where the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4;}$$

obtain a first-side power adjustment value $\Delta_1$ of the terminal device based on the first-side real-time scheduling information and the second-side preset scheduling information of the terminal device by using the following formula 5, where the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5;}$$

and

obtain the first-side initial AMPR of the terminal device based on the resource block allocation ratio A4 and the power adjustment value $\Delta_1$, where

$L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

Optionally, the first side is an NR side, and the second side is an LTE side;

the processor 1003 is further configured to: obtain the LTE-side AMPR of the terminal device based on the NR-side semi-static configuration information and the LTE-side real-time scheduling information of the terminal device, where the semi-static configuration information includes NR-side bandwidth part BWP information of the terminal device; and determine an LTE-side maximum power of the terminal device based on the LTE-side AMPR; and

the transceiver 1001 is further configured to send the LTE-side maximum power to the network device.

An embodiment of this application further provides a terminal device, including: a memory, a processor, and a computer program. The computer program is stored in the memory, and the processor runs the computer program to perform the power determining method according to any one of the embodiments shown in FIG. 2 to FIG. 5.

An embodiment of this application further provides a computer storage medium. The storage medium includes a computer program, and the computer program is configured to perform the power determining method according to any one of the embodiments shown in FIG. 2 to FIG. 5.

An embodiment of this application further provides a computer program product. The computer program product includes computer program code, and when the computer program code is run on a computer, the computer is enabled to perform the power determining method according to any one of the embodiments shown in FIG. 2 to FIG. 5.

An embodiment of this application further provides a chip, including a memory and a processor. The memory is configured to store a computer program. The processor is configured to invoke the computer program from the memory and run the computer program, so that a terminal device on which the chip is installed performs the power determining method according to any one of the embodiments shown in FIG. 2 to FIG. 5.

In the embodiments of this application, a method on a network device side may be performed by a network device or an apparatus in a network device (it should be noted that the network device is used as an example for description in the embodiments provided in this application). For example, the apparatus in the network device may be a chip system, a circuit, a module, or the like. This is not limited in this application.

In this application, "at least one" means one or more and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following items" or a similar expression thereof means any combination of these items, including any combination of a single item or a plurality of items. For example, at least one of a, b, or c may represent a, b, c, a-b, a-c, b-c, or a-b-c, where there may be one or more a, b, or c.

In the embodiments of this application, the processor may be a general processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to the embodiments of this application may be directly performed by a hardware processor, or may be performed by using a combination of hardware in the processor and a software module.

The memory in the embodiments of this application may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that may be configured to carry or store desired program code in a form of an instruction or a data structure and that may be accessed by a computer, but is not limited thereto.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units.

Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

Persons of ordinary skill in the art may understand that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

All or some of the foregoing embodiments may be implemented by using software, hardware, firmware, or any combination thereof. When software is used to implement the embodiments, the embodiments may be implemented whole or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive Solid State Disk (SSD)), or the like.

**Claims**

1. A power determining method, comprising:

   obtaining, by a terminal device, an LTE-side AMPR of the terminal device based on NR-side semi-static configuration information and LTE-side real-time scheduling information of the terminal device, wherein the semi-static configuration information comprises NR-side BWP information of the terminal device; and
   determining, by the terminal device, an LTE-side configured maximum power of the terminal device based on the LTE-side AMPR, and sending the LTE-side configured maximum power to a network device.

2. The method according to claim 1, wherein the obtaining, by a terminal device, an LTE-side AMPR of the terminal device based on NR-side semi-static configuration information and LTE-side real-time scheduling information of the terminal device comprises:

   obtaining, by the terminal device, an LTE-side resource block allocation ratio of the terminal device based on first BWP information and the LTE-side real-time scheduling information, wherein the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;
   obtaining, by the terminal device, an LTE-side power adjustment value of the terminal device based on second BWP information and the LTE-side real-time scheduling information, wherein the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and
   obtaining, by the terminal device, the LTE-side AMPR of the terminal device based on the LTE-side resource block allocation ratio and the LTE-side power adjustment value.

3. The method according to claim 2, wherein the obtaining, by the terminal device, an LTE-side resource block allocation ratio of the terminal device based on first BWP information and the LTE-side real-time scheduling information comprises:

obtaining, by the terminal device, the LTE-side resource block allocation ratio A1 of the terminal device based on the first BWP information and the LTE-side real-time scheduling information by using the following formula 1:

$$A1 = \frac{L_{CRB,LTE}+BWP1_{NR}}{N_{RB,LTE}+N_{RB,NR}} \qquad \text{formula 1,}$$

wherein $L_{CRB,LTE}$ is the quantity of resource blocks RBs allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

4. The method according to claim 2, wherein the obtaining, by the terminal device, an LTE-side power adjustment value of the terminal device based on second BWP information and the LTE-side real-time scheduling information comprises:
obtaining, by the terminal device, the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE}+BWP4_{NR}} \qquad \text{formula 2,}$$

wherein
$L_{CRB,LTE}$ is the quantity of resource blocks allocated in the LTE-side real-time scheduling information, and $BWP4_{NR}$ is the quantity of resource blocks in the NR-side second BWP.

5. The method according to claim 1, wherein the method further comprises:

obtaining, by the terminal device, an NR-side AMPR of the terminal device based on the LTE-side real-time scheduling information and NR-side real-time scheduling information of the terminal device; and
determining, by the terminal device, an NR-side maximum power of the terminal device based on the NR-side AMPR, and sending the NR-side maximum power to the network device.

6. The method according to claim 5, wherein the obtaining, by the terminal device, an NR-side AMPR of the terminal device based on the LTE-side real-time scheduling information and NR-side real-time scheduling information of the terminal device comprises:

obtaining, by the terminal device, an NR-side resource block allocation ratio A3 of the terminal device based on the LTE-side real-time scheduling information and the NR-side real-time scheduling information of the terminal device by using the following formula 3, wherein the resource block allocation ratio is a ratio of a quantity of resource blocks allocated to the terminal device to a quantity of resource blocks in a transmission bandwidth:

$$A3 = \frac{L_{CRB,LTE}+L_{CRB,NR}}{N_{RB,LTE}+N_{RB,NR}} \qquad \text{formula 3;}$$

and
obtaining, by the terminal device, the NR-side AMPR of the terminal device based on the NR-side resource block allocation ratio A3, wherein
$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

7. The method according to claim 1, wherein before the obtaining, by a terminal device, an LTE-side AMPR of the terminal device based on NR-side semi-static configuration information and LTE-side real-time scheduling information of the terminal device, the method further comprises:
determining, by the terminal device, that the terminal device is located at a non-cell-edge location.

8. The method according to claim 5, wherein before the determining, by the terminal device, an NR-side maximum power of the terminal device based on the NR-side AMPR, the method further comprises:

compensating, by the terminal device, the NR-side AMPR of the terminal device based on the LTE-side AMPR and the NR-side AMPR.

9. The method according to claim 8, wherein the compensating, by the terminal device, the NR-side AMPR of the terminal device based on the LTE-side AMPR and the NR-side AMPR comprises:

obtaining, by the terminal device, a difference between the NR-side AMPR and the LTE-side AMPR; and compensating, by the terminal device, the NR-side AMPR of the terminal device based on the difference.

10. A power determining method, comprising:

obtaining, by a terminal device, a first-side initial AMPR of the terminal device based on first-side real-time scheduling information and second-side preset scheduling information of the terminal device;

determining, by the terminal device, a first-side AMPR compensation value of the terminal device based on a preset probability value and a first mapping relationship, wherein the first mapping relationship is a mapping relationship between an AMPR compensation value and a probability value, and the first mapping relationship indicates a probability of overcompensating the initial AMPR when the initial AMPR is compensated with different AMPR compensation values;

determining, by the terminal device, a first-side AMPR of the terminal device based on the first-side initial AMPR and the first-side AMPR compensation value; and

determining, by the terminal device, a first-side maximum power of the terminal device based on the first-side AMPR, and sending the first-side maximum power to a network device, wherein

one of the first side and the second side is an LTE side, and the other is an NR side.

11. The method according to claim 10, wherein before the determining, by the terminal device, a first-side AMPR compensation value of the terminal device based on a preset probability value and a first mapping relationship, the method further comprises:

obtaining, by the terminal device, first-side first AMPRs of the terminal device that correspond to different value combinations of first-side real-time scheduling information and second-side real-time scheduling information;

obtaining, by the terminal device based on the second-side preset scheduling information and the first-side real-time scheduling information that is in each of the combinations, a first-side second AMPR corresponding to each of the combinations;

obtaining, by the terminal device based on the first-side first APMR and the first-side second AMPR that correspond to each of the combinations, an AMPR compensation value corresponding to each of the combinations; and

obtaining, by the terminal device, the first mapping relationship based on the AMPR compensation value corresponding to each of the combinations.

12. The method according to claim 10, wherein the obtaining, by a terminal device, a first-side initial AMPR of the terminal device based on first-side real-time scheduling information and second-side preset scheduling information of the terminal device comprises:

obtaining, by the terminal device, a first-side resource block allocation ratio A4 of the terminal device based on the first-side real-time scheduling information and the second-side preset scheduling information of the terminal device by using the following formula 4, wherein the resource block allocation ratio is a ratio of a quantity of resource blocks allocated to the terminal device to a quantity of resource blocks in a transmission bandwidth:

$$A4 = \frac{L_{CRB,1}+K}{N_{RB,1}+\tilde{N}_{RB,2}} \qquad \text{formula 4;}$$

obtaining, by the terminal device, a first-side power adjustment value $\Delta_1$ of the terminal device based on the first-side real-time scheduling information and the second-side preset scheduling information of the terminal device by using the following formula 5, wherein the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5;}$$

and

obtaining, by the terminal device, the first-side initial AMPR of the terminal device based on the resource block allocation ratio A4 and the power adjustment value $\Delta_1$, wherein $L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

13. The method according to claim 10, wherein the first side is an NR side, the second side is an LTE side, and the method further comprises:

obtaining, by the terminal device, an LTE-side AMPR of the terminal device based on NR-side semi-static configuration information and LTE-side real-time scheduling information of the terminal device, wherein the semi-static configuration information comprises NR-side bandwidth part BWP information of the terminal device; and

determining, by the terminal device, an LTE-side maximum power of the terminal device based on the LTE-side AMPR, and sending the LTE-side maximum power to the network device.

14. A power determining apparatus, comprising:

an AMPR obtaining module, configured to obtain an LTE-side AMPR of the terminal device based on NR-side semi-static configuration information and LTE-side real-time scheduling information of the terminal device, wherein the semi-static configuration information comprises NR-side BWP information of the terminal device;

a power determining module, configured to determine an LTE-side maximum power of the terminal device based on the LTE-side AMPR; and

a sending module, configured to send the LTE-side maximum power to a network device.

15. The apparatus according to claim 14, wherein the AMPR obtaining module comprises:

a resource block allocation ratio obtaining unit, configured to obtain an LTE-side resource block allocation ratio of the terminal device based on first BWP information and the LTE-side real-time scheduling information, wherein the resource block allocation ratio is a ratio of a quantity of resource blocks allocated to the terminal device to a quantity of resource blocks in a transmission bandwidth, and the first BWP information is information about a quantity of resource blocks in a BWP with a minimum bandwidth in the semi-static configuration information;

a power adjustment value obtaining unit, configured to obtain an LTE-side power adjustment value of the terminal device based on second BWP information and the LTE-side real-time scheduling information, wherein the power adjustment value indicates a ratio of a quantity of resource blocks allocated in the LTE-side real-time scheduling information of the terminal device to a sum of the quantity of resource blocks allocated in the LTE-side real-time scheduling information and a quantity of resource blocks in an NR-side second BWP, and the second BWP information is information about a quantity of resource blocks in a BWP with a maximum bandwidth in the semi-static configuration information; and

an AMPR obtaining unit, configured to obtain the LTE-side AMPR of the terminal device based on the LTE-side resource block allocation ratio and the LTE-side power adjustment value.

16. The apparatus according to claim 15, wherein the resource block allocation ratio obtaining unit is specifically configured to:

obtain the LTE-side resource block allocation ratio A1 of the terminal device based on the first BWP information and the LTE-side real-time scheduling information by using the following formula 1:

$$A1 = \frac{L_{CRB,LTE} + BWP1_{NR}}{N_{RB,LTE} + N_{RB,NR}} \qquad \text{formula 1,}$$

wherein

$L_{CRB,LTE}$ is the quantity of resource blocks allocated in the LTE-side real-time scheduling information, $BWP1_{NR}$ is a quantity of resource blocks in an NR-side first BWP, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side semi-static configuration information.

17. The apparatus according to claim 15, wherein the power adjustment value obtaining unit is specifically configured to: obtain the LTE-side power adjustment value $\Delta_{LTE}$ of the terminal device based on the second BWP information and the LTE-side real-time scheduling information by using the following formula 2:

$$\Delta_{LTE} = 10 \log_{10} \frac{L_{CRB,LTE}}{L_{CRB,LTE} + BWP4_{NR}} \qquad \text{formula 2,}$$

wherein
$L_{CRB,LTE}$ is the quantity of resource blocks allocated in the LTE-side real-time scheduling information, and $BWP4_{NR}$ is the quantity of resource blocks in the NR-side second BWP.

18. The apparatus according to claim 14, wherein the AMPR obtaining module is further configured to obtain an NR-side AMPR of the terminal device based on the LTE-side real-time scheduling information and NR-side real-time scheduling information of the terminal device;
the power determining module is further configured to determine an NR-side maximum power of the terminal device based on the NR-side AMPR; and
the sending module is further configured to send the NR-side maximum power to the network device.

19. The apparatus according to claim 18, wherein the resource block allocation ratio obtaining unit is further configured to obtain an NR-side resource block allocation ratio A3 of the terminal device based on the LTE-side real-time scheduling information and the NR-side real-time scheduling information of the terminal device by using the following formula 3, wherein the resource block allocation ratio is a ratio of a quantity of resource blocks allocated to the terminal device to a quantity of resource blocks in a transmission bandwidth:

$$A3 = \frac{L_{CRB,LTE} + L_{CRB,NR}}{N_{RB,LTE} + N_{RB,NR}} \qquad \text{formula 3;}$$

and
the AMPR obtaining unit is further configured to obtain the NR-side AMPR of the terminal device based on the NR-side resource block allocation ratio A3, wherein
$L_{CRB,LTE}$ is a quantity of resource blocks allocated in the LTE-side real-time scheduling information, $L_{CRB,NR}$ is a quantity of resource blocks allocated in the NR-side real-time scheduling information, $N_{RB,LTE}$ is a quantity of resource blocks in a transmission bandwidth in the LTE-side real-time scheduling information, and $N_{RB,NR}$ is a quantity of resource blocks in a transmission bandwidth in the NR-side real-time scheduling information.

20. The apparatus according to claim 14, wherein the apparatus further comprises:

a location detection module, configured to determine whether the terminal device is located at a cell-edge location; and
the AMPR obtaining module is specifically configured to: when the terminal device is located at a non-cell-edge location, obtain the LTE-side AMPR of the terminal device based on the NR-side semi-static configuration information and the LTE-side real-time scheduling information of the terminal device.

21. The apparatus according to claim 18, wherein the apparatus further comprises:
a compensation module, configured to compensate the NR-side AMPR of the terminal device based on the LTE-side AMPR and the NR-side AMPR.

22. The apparatus according to claim 21, wherein the compensation module comprises:

a difference obtaining unit, configured to obtain a difference between the NR-side AMPR and the LTE-side AMPR; and
a compensation unit, configured to compensate the NR-side AMPR of the terminal device based on the difference.

**23.** A power determining apparatus, comprising:

an AMPR obtaining module, configured to obtain a first-side initial AMPR of the terminal device based on first-side real-time scheduling information and second-side preset scheduling information of the terminal device;

an AMPR compensation value obtaining module, configured to determine a first-side AMPR compensation value of the terminal device based on a preset probability value and a first mapping relationship, wherein the first mapping relationship is a mapping relationship between an AMPR compensation value and a probability value, and the first mapping relationship indicates a probability of overcompensating the initial AMPR when the initial AMPR is compensated with different AMPR compensation values;

an AMPR compensation module, configured to determine a first-side AMPR of the terminal device based on the first-side initial AMPR and the first-side AMPR compensation value;

a power determining module, configured to determine a first-side maximum power of the terminal device based on the first-side AMPR; and

a sending module, configured to send the first-side maximum power to a network device, wherein

one of the first side and the second side is an LTE side, and the other is an NR side.

**24.** The apparatus according to claim 23, wherein the AMPR obtaining module is further configured to obtain first-side first AMPRs of the terminal device that correspond to different value combinations of first-side real-time scheduling information and second-side real-time scheduling information;

the AMPR obtaining module is further configured to obtain, based on the second-side preset scheduling information and the first-side real-time scheduling information that is in each of the combinations, a first-side second AMPR corresponding to each of the combinations; and

the apparatus further comprises: a first mapping relationship obtaining module, configured to: obtain, based on the first-side first APMR and the first-side second AMPR that correspond to each of the combinations, an AMPR compensation value corresponding to each of the combinations, and obtain the first mapping relationship based on the AMPR compensation value corresponding to each of the combinations.

**25.** The apparatus according to claim 23, wherein the AMPR obtaining module comprises:

a resource block allocation ratio obtaining unit, configured to obtain a first-side resource block allocation ratio A4 of the terminal device based on the first-side real-time scheduling information and the second-side preset scheduling information of the terminal device by using the following formula 4, wherein the resource block allocation ratio is a ratio of a quantity of resource blocks allocated to the terminal device to a quantity of resource blocks in a transmission bandwidth:

$$A4 = \frac{L_{CRB,1} + K}{N_{RB,1} + \tilde{N}_{RB,2}} \qquad \text{formula 4};$$

a power adjustment value obtaining unit, configured to obtain a first-side power adjustment value $\Delta_1$ of the terminal device based on the first-side real-time scheduling information and the second-side preset scheduling information of the terminal device by using the following formula 5, wherein the power adjustment value indicates a ratio of a quantity of resource blocks allocated in the first-side real-time scheduling information of the terminal device to a sum of the quantity of resource blocks allocated in the first-side real-time scheduling information and a quantity of resource blocks allocated in the second-side real-time scheduling information:

$$\Delta_1 = 10 \ log_{10} \frac{L_{CRB,1}}{L_{CRB,1} + \tilde{N}_{RB,2}} \qquad \text{formula 5};$$

and

an AMPR obtaining unit, configured to obtain the first-side initial AMPR of the terminal device based on the resource block allocation ratio A4 and the power adjustment value $\Delta_1$, wherein

$L_{CRB,1}$ is the quantity of resource blocks allocated in the first-side real-time scheduling information, K is a quantity of resource blocks allocated in the second-side preset scheduling information, $N_{RB,1}$ is a quantity of resource blocks in a transmission bandwidth in the first-side real-time scheduling information, and $\tilde{N}_{RB,2}$ is a quantity of resource blocks in a channel bandwidth configuration in the second-side preset scheduling information.

**26.** The apparatus according to claim 23, wherein the first side is an NR side, and the second side is an LTE side;

the AMPR obtaining module is further configured to obtain an LTE-side AMPR of the terminal device based on NR-side semi-static configuration information and LTE-side real-time scheduling information of the terminal device, wherein the semi-static configuration information comprises NR-side bandwidth part BWP information of the terminal device;

the power determining module is further configured to determine an LTE-side maximum power of the terminal device based on the LTE-side AMPR; and

the sending module is further configured to send the LTE-side maximum power to the network device.

27. A terminal device, comprising: a memory, a processor, and a computer program, wherein the computer program is stored in the memory, and the processor runs the computer program to perform the power determining method according to any one of claims 1 to 13.

28. A computer storage medium, wherein the storage medium comprises a computer program, and the computer program is configured to perform the power determining method according to any one of claims 1 to 13.

29. A computer program product, wherein the computer program product comprises computer program code, and when the computer program code is run on a computer, the computer is enabled to perform the power determining method according to any one of claims 1 to 13.

30. A chip, comprising a memory and a processor, wherein the memory is configured to store a computer program, and the processor is configured to invoke the computer program from the memory and run the computer program, so that a terminal device on which the chip is installed performs the power determining method according to any one of claims 1 to 13.

Network device

LTE    NR

Terminal device

LTE → NR

FIG. 1

Terminal device

Network device

S201: Obtain an LTE-side AMPR of a terminal device based on NR-side semi-static configuration information and LTE-side real-time scheduling information of the terminal device

S202: Determine an LTE-side configured maximum power of the terminal device based on the LTE-side AMPR

S203: Send the LTE-side configured maximum power to a network device

FIG. 2

The terminal device determines whether the terminal device is located at a non-cell-edge location    S302

Yes

No

A terminal device obtains an NR-side AMPR of the terminal device based on LTE-side real-time scheduling information and NR-side real-time scheduling information of the terminal device    S301

The terminal device obtains an LTE-side AMPR of the terminal device based on NR-side semi-static configuration information and the LTE-side real-time scheduling information of the terminal device    S303

The terminal device obtains an LTE-side AMPR of the terminal device based on the LTE-side real-time scheduling information and NR-side preset scheduling information of the terminal device    S304

The terminal device compensates the NR-side AMPR of the terminal device based on the LTE-side AMPR and the NR-side AMPR    S3051

The terminal device determines the LTE-side configured maximum power of the terminal device based on the LTE-side AMPR, and determines the LTE-side configured maximum power of the terminal device based on the LTE-side AMPR    S305

The terminal device sends the LTE-side configured maximum power and the NR-side configured maximum power to a network device    S306

FIG. 3

A terminal device obtains a first-side initial AMPR of the terminal device based on first-side real-time scheduling information and second-side preset scheduling information of the terminal device — S401

The terminal device determines a first-side AMPR compensation value of the terminal device based on a preset probability value and a first mapping relationship — S402

The terminal device determines a first-side AMPR of the terminal device based on the first-side initial AMPR and the first-side AMPR compensation value — S403

The terminal device determines a first-side maximum power of the terminal device based on the first-side AMPR, and sends the first-side maximum power to a network device — S404

FIG. 4

A terminal device obtains first-side first AMPRs of the terminal device that correspond to different value combinations of first-side real-time scheduling information and second-side real-time scheduling information

~ S501

The terminal device obtains, based on second-side preset scheduling information and the first-side real-time scheduling information that is in each of the combinations, a first-side second AMPR corresponding to each of the combinations

~ S502

The terminal device obtains, based on the first-side first APMR and the first-side second AMPR that correspond to each of the combinations, an AMPR compensation value corresponding to each of the combinations

~ S503

The terminal device obtains a first mapping relationship based on the AMPR compensation value corresponding to each of the combinations

~ S504

FIG. 5

Power determining apparatus

604   601   605   602   603

| Location detection module | AMPR obtaining module | Compensation module | Power determining module | Sending module |

FIG. 6

36

601

AMPR obtaining module

6011                    6012                    6013

| Resource block allocation ratio obtaining unit | Power adjustment value obtaining unit | AMPR obtaining unit |

FIG. 7

605

Compensation module

6051                                6052

| Difference obtaining unit | Compensation unit |

FIG. 8

Power determining apparatus

| 901 | 906 | 902 | 903 | 904 | 905 |
|---|---|---|---|---|---|
| AMPR obtaining module | First mapping relationship obtaining module | AMPR compensation value obtaining module | AMPR compensation module | Power determining module | Sending module |

FIG. 9

FIG. 10

## INTERNATIONAL SEARCH REPORT

| International application No. |
|---|
| **PCT/CN2019/100250** |

**A.    CLASSIFICATION OF SUBJECT MATTER**

H04W 52/18(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 功率, 双连接, 最大功率降低, 回退, 半静态, 调度信息, 部分带宽, 资源块, power, double linkage, AMPR, rollback, semi static, scheduling, BWP, 4G, 5G, LTE, NR

**C.    DOCUMENTS CONSIDERED TO BE RELEVANT**

| Category* | Citation of document, with indication, where appropriate, of the relevant passages | Relevant to claim No. |
|---|---|---|
| A | CN 105519215 A (LG ELECTRONICS INC.) 20 April 2016 (2016-04-20) description, pages 1-2 | 1-30 |
| A | CN 105359595 A (SAMSUNG ELECTRONICS CO., LTD.) 24 February 2016 (2016-02-24) entire document | 1-30 |
| A | CN 105580451 A (SHARP CORPORATION) 11 May 2016 (2016-05-11) entire document | 1-30 |
| A | CN 105323840 A (POTEVIO INFORMATION TECHNOLOGY CO., LTD.) 10 February 2016 (2016-02-10) entire document | 1-30 |
| A | US 2013229998 A1 (LG ELECTRONICS INC.) 05 September 2013 (2013-09-05) entire document | 1-30 |
| A | VODAFONE GROUP PLC. "Uplink Operation for LTE+NR Dual Connectivity" *3GPP TSG RAN WG2 Meeting #95, R2-164977*, 26 August 2016 (2016-08-26), pp. 1-2 | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 October 2019** | **29 October 2019** |

| Name and mailing address of the ISA/CN | Authorized officer |
|---|---|
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

# EP 3 836 646 A1

## INTERNATIONAL SEARCH REPORT
### Information on patent family members

International application No.

**PCT/CN2019/100250**

| Patent document cited in search report | | | Publication date (day/month/year) | Patent family member(s) | | | Publication date (day/month/year) |
|---|---|---|---|---|---|---|---|
| CN | 105519215 | A | 20 April 2016 | KR | 20160052577 | A | 12 May 2016 |
| | | | | US | 2019281559 | A1 | 12 September 2019 |
| | | | | JP | 2016529853 | A | 23 September 2016 |
| | | | | CN | 105519210 | A | 20 April 2016 |
| | | | | WO | 2015034302 | A1 | 12 March 2015 |
| | | | | JP | 2016534658 | A | 04 November 2016 |
| | | | | MX | 2016002877 | A | 17 August 2016 |
| | | | | US | 2016212711 | A1 | 21 July 2016 |
| | | | | US | 2018063798 | A1 | 01 March 2018 |
| | | | | WO | 2015034300 | A1 | 12 March 2015 |
| | | | | RU | 2627299 | C1 | 07 August 2017 |
| | | | | RU | 2627300 | C1 | 07 August 2017 |
| | | | | CN | 105637944 | A | 01 June 2016 |
| | | | | WO | 2015034299 | A1 | 12 March 2015 |
| | | | | US | 2018098288 | A1 | 05 April 2018 |
| | | | | US | 2018279230 | A1 | 27 September 2018 |
| | | | | JP | 2016533131 | A | 20 October 2016 |
| | | | | EP | 3042536 | A1 | 13 July 2016 |
| | | | | KR | 20160052578 | A | 12 May 2016 |
| | | | | US | 2016198421 | A1 | 07 July 2016 |
| | | | | US | 2019166561 | A1 | 30 May 2019 |
| | | | | KR | 20160053939 | A | 13 May 2016 |
| | | | | EP | 3042529 | A1 | 13 July 2016 |
| | | | | US | 2016205632 | A1 | 14 July 2016 |
| | | | | RU | 2627306 | C1 | 07 August 2017 |
| | | | | EP | 3042531 | A1 | 13 July 2016 |
| CN | 105359595 | A | 24 February 2016 | WO | 2014178690 | A1 | 06 November 2014 |
| | | | | EP | 2992714 | A1 | 09 March 2016 |
| | | | | US | 2017164298 | A1 | 08 June 2017 |
| | | | | JP | 2019097189 | A | 20 June 2019 |
| | | | | JP | 2016521074 | A | 14 July 2016 |
| | | | | US | 2019028976 | A1 | 24 January 2019 |
| | | | | US | 2014329551 | A1 | 06 November 2014 |
| | | | | KR | 20140131285 | A | 12 November 2014 |
| CN | 105580451 | A | 11 May 2016 | US | 2015085760 | A1 | 26 March 2015 |
| | | | | WO | 2015045335 | A1 | 02 April 2015 |
| | | | | JP | 2016536812 | A | 24 November 2016 |
| | | | | EP | 3050370 | A1 | 03 August 2016 |
| CN | 105323840 | A | 10 February 2016 | None | | | |
| US | 2013229998 | A1 | 05 September 2013 | KR | 20120011817 | A | 08 February 2012 |
| | | | | WO | 2012015227 | A2 | 02 February 2012 |
| | | | | US | 2016323875 | A1 | 03 November 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810911074